(19) **Europäisches Patentamt / European Patent Office / Office européen des brevets**

(11) **EP 3 023 968 B1**

(12) **EUROPEAN PATENT SPECIFICATION**

(45) Date of publication and mention
of the grant of the patent:
**28.02.2018 Bulletin 2018/09**

(51) Int Cl.:
*G09F 3/02* *(2006.01)*  *B32B 7/02* *(2006.01)*
*B32B 7/06* *(2006.01)*  *B32B 7/12* *(2006.01)*
*B32B 27/08* *(2006.01)*  *B32B 27/10* *(2006.01)*
*B32B 27/30* *(2006.01)*  *B32B 27/32* *(2006.01)*
*B32B 29/00* *(2006.01)*

(21) Application number: **14397535.7**

(22) Date of filing: **18.11.2014**

(54) **A removable label**

Entfernbares Etikett

Étiquette amovible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.05.2016 Bulletin 2016/21**

(73) Proprietor: **UPM Raflatac Oy
33310 Tampere (FI)**

(72) Inventor: **Leino, Teemu
33200 Tampere (FI)**

(74) Representative: **Berggren Oy, Tampere
Visiokatu 1
33720 Tampere (FI)**

(56) References cited:
**WO-A1-95/29475     WO-A1-97/44769
WO-A1-99/55791     WO-A1-2010/060205
US-A- 4 608 288     US-A- 5 277 971**

**Description**

FIELD

Some variations may relate to tamper-evident labeling of a package.

BACKGROUND

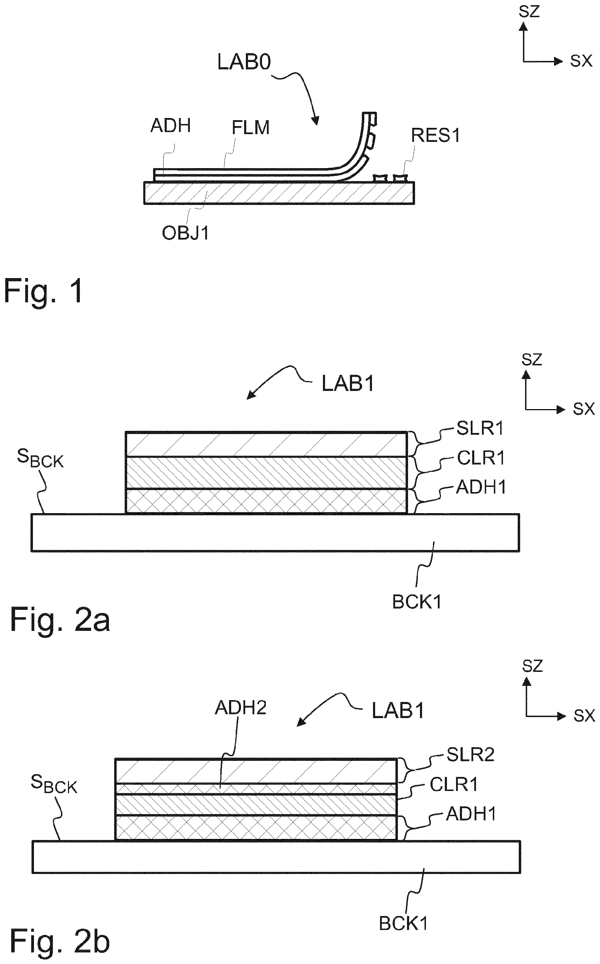

Referring to Fig. 1, a package material OBJ1 may be labeled with an adhesive label LAB0. The label LAB0 may comprise a film layer FLM and an adhesive layer ADH attaching the label LAB0 to the package OBJ1. The label LAB0 may be removed from the package OBJ1 by peeling the label LAB0.
However, the label LAB0 can sometimes be separated from the package such that visual or non-visual residues or contamination RES1 of the label LAB0 remain on the package OBJ1 surface. This may be a problem especially if the package OBJ1 is intended to be reusable or returnable. Such residues RES1 may stick to other items or packages during transportation. Visual residues RES1 may render the appearance of the package OBJ1 undesirable, which may prevent the use of the package OBJ1 for delivering products. The residues or contamination RES1 may need to be cleaned. Cleaning may be laborious. The surface of the reusable package should remain free of any residues RES1 of the removed label LAB0, such as adhesive ADH residues or combinations of adhesive ADH and film layer FLM.
Counterfeiting and unauthorized tampering of products is a problem. The label LAB0 may be attached to the package such that package cannot be opened without damaging the label LAB0. A sealing label may be used to prevent a potential third party from replacing or removing some of the contents of the package. The presence of an intact sealing label on the package may be interpreted to indicate that the package has not been tampered. The presence of an intact sealing label on the package may be interpreted to indicate e.g. that the original contents of the package have not been tampered with or replaced with a falsified product.
To avoid the aforementioned residues or contamination RES1, it is known to use a label, which comprises a weak adhesive. However, a weak adhesive may become prematurely separated from the package surface. For tamper evidence, it is known to use a label, which comprises a strong adhesive. The strong adhesive sticks to the package surface such that when removing the label, the label is damaged and residues of the label remain on the package surface. The residues may be visually detectable and may stick to foreign objects or collide with the foreign objects, when the package is reused. Consequently, handling of such labels may cause problems on a package. WO 99/55791 discloses a tamper-indicating label for reusable substrates.

SUMMARY

Some variations may relate to a removable label. Some variations may relate to a removable sealing label. Some variations may relate to a combination of a package and a removable label. Some variations may relate to a method for producing a removable label. Some variations may relate to a method for producing an attachable and removable label. Some variations may relate to a method of attaching a label to a package. Some variations may relate to a method of removing a label from a package. Some variations may relate to a method of verifying whether a package has been tampered.
According to a first aspect, there is provided a removable label of claim 1.
According to a second aspect, there is provided a combination of a removable label and a package according to claim 13.
According to a third aspect, there is provided a method for producing a removable label according to claim 16.
According to a fourth aspect, there is provided a use for a removable label on a surface of a package according to claim 17.
A removable label may comprise or consist of a polymeric core layer having a first side and a second side, an adhesive layer on the first side of the core layer, and a face layer on the second side of the core layer.
A removable label may comprise different number of layers. A removable label may comprise layers having different order relative to each other. In an embodiment, a removable label may comprise, for example two core layers, such that a face layer is provided between the two core layers. In an embodiment, a removable label may comprise, for example a face layer arranged between a core layer and an adhesive layer.
The removable label may be attached to a package by means of the adhesive layer. The package may be a reusable or returnable package. The package may also be a sealable object, such as a container. Material suitable for use as a reusable package material has typically a reasonably high tensile strength and impact strength. Material suitable for use as a reusable package material may be for example polymeric material, such as thermoplastic polymer. Material suitable for use as a reusable package material may alternatively be for example card board material, such as coated board or polyethylene coated board. Material suitable for use as a reusable package material may alternatively be metal.

For sealing purposes, the material may be any of the above, or glass, for example. A reusable package may consist of more than one type of material. A reusable package has a durable structure and surface, such that the package may be used multiple times without visual damage to the package surface. For example, the removable label may be attached and subsequently removed from the package without visual damage to an adhesion surface of the package. An adhesion surface is a surface portion of the package which is, or has been, covered by a label having an adhesive layer. An adhesion surface is a surface portion of the package wherein a label may be attached by means of an adhesive layer. An adhesive layer used in attaching the removable label may remain on the label when removed from the package surface. The entire label may be pulled off as an entity, i.e. in a single piece, such that the label leaves no visual or otherwise detectable residues on the adhesion surface of the reusable package. On a reusable package, the removable label may be attached and then removed from the package such that another new and unused label may be attached to the package. The new and unused label may be attached to the package on the same position or to a new position.

Due to the fact that a label or sealing label according to the invention can be used both with disposable or reusable packages, the selection of the materials and material properties can be selected in various manners, such that a functional combination of a removable label and a package is provided. Below is presented one method for such selection.

First, adhesion surface properties of a package material relevant for selecting the adhesive material of an adhesive layer may be determined by using an adhesion test. The adhesion test can be, for example, a simple adhesion test where adhesive test tapes having different tack values are attached to the surface of the package material to be tested. Such adhesion test is, for example FINAT test method FTM9 for tack measurement (FINAT handbook 9th edition, 2014). Tack is a measure of a force required to remove a label attached by means of an adhesive to a surface. A tack value of an adhesive material in this context represents the amount of force required to separate adhesive material, which has been brought into contact with a specified surface, from the surface. A tack value of an adhesive is a measure of the ability of an adhesive to attach with a defined strength on a given surface material, when a defined pressure force is applied. In other words, when the adhesive material in contact with a given surface material is subjected to a pulling force for removing the adhesive material, tack value represents the amount of force resisting such pulling force in given conditions. Peel adhesion in this context represents a measure of the bond strength between an adhesive and a given surface material, after pressure is applied to the adhesive and after allowing for wet-out onto the given surface material (i.e. adhesive set up). Peel adhesion therefore represents the amount of force required to remove adhesive material, which has been applied to a specified surface, after a given time. A peel adhesion may be tested, for example by FINAT test method FTM1 or FTM2 (FINAT handbook 9th edition, 2014). The number of adhesive samples, i.e. test tapes used in a test, may vary. Preferably, at least three different adhesive samples, such as at least five different adhesive samples, may be used. Different adhesive materials may be tested, such that in addition to a tack value range, suitable adhesive materials for the surface of the package material may also be identified. A suitable adhesive material in this context refers to adhesive material having a sufficient tack value towards the tested surface material, and which may be used in providing a removable label. Then, each attached adhesive test tape is removed from the package material surface. After removal of the adhesive test tape it is observed, which adhesive test tapes are removable without damage to the tested package material surface. This method provides a range of adhesive tack values which are usable to design a removable label for such package material surface. This method may also be used to provide a range of adhesive materials having a suitable tack value for such package material surface. Then, the adhesive tack value thus obtained is used to select the core layer material for the removable label. The properties of the core layer material are selected based on the adhesive tack value, such that upon removal of the label from the package surface, the core layer does not break or become divided in parts. The core layer material is selected such that minimum detaching force of the adhesive layer is less than the minimum breaking force required to break or divide the core layer. The core layer is therefore such that it remains undivided, i.e in one piece, when the label is pulled off from an adhesion surface. The core layer may be selected such that when the label is pulled off from an adhesion surface, the core layer undergoes an irreversible deformation, while remaining undivided. The properties of the core layer material may therefore be selected such that the minimum detaching force of the adhesive from the adhesion surface, which corresponds to the adhesive tack value, is equal to or higher than the minimum yield force of the core layer, wherein the core layer begins to deform plastically. The minimum yield force of the core layer is a minimum force sufficient to cause permanent deformation (i.e. stretch) to the core layer upon removal of the label from a labelled surface, which may appear as elongation of the core layer, and which elongation may be used to facilitate observation of irreversible damage to the label. The minimum detaching force of the adhesive layer may alternatively be selected such, that a non-permanent deformation (i.e elastic or reversible elongation) takes place on the core layer. Having thus defined a tack value range suitable for the package surface, an adhesive having such tack value and selected a core layer having suitable tensile stress and elongation properties, the selection of the face layer is based on the minimum breaking force required to break the face layer. The minimum breaking force is less than the pulling force produced onto the label structure upon removal of the label from a package material surface. The minimum breaking force required to break the face layer is relative to the minimum detaching force of the adhesive, being typically less than the minimum detaching force of the adhesive, which corresponds to the adhesive tack value. The properties of the face layer material are selected based on the adhesive tack value, such that upon removal of the label from the package surface, the face layer undergoes a non-reversible deformation wherein the face material becomes visibly broken and/or is divided into a visibly detectable mosaic like structure, while remaining attached to the undivided core layer. A pulling force $F_N$ generated onto the label structure, which force $F_N$ is sufficient to remove the label, deforms at least the face layer the label. A pulling force $F_N$ generated onto the label structure, which force $F_N$ is sufficient to remove the label, may also deform the core layer of the label. Therefore, the functioning of the label is based on a selection of an adhesive having an adhesive tack value producing a suitable detaching force for the adhesive for a given surface and subsequent selection of a core and a face layer material based on said adhesive tack value. It should be understood, that upon removal of the label from the package surface, i.e. an adhesion surface, the pulling force $F_N$ generated onto the label structure is resisted by means of a counteracting force. The counteracting force is generated by the adhesive attached to the surface of the package, the adhesive having an adhesion force, i.e a tack, towards the surface of the package. The pulling force $F_N$ will act upon the whole multilayer structure of the label comprising both the core layer and the face layer. Thus, in order to deform the core layer in such a multilayer structure, the pulling force $F_N$ may be greater than a force that would be needed to deform the core material layer alone. Therefore, to provide a functional label structure combination, the core layer and face layer materials may be tested. The method described above provides a label structure, wherein the adhesive tack value has been selected based on the surface properties of the package material. The surface properties may reflect the end use application, such as a reusable package. Labels may be manufactured in various sizes. A label has a length $L_{10}$, a width $W_{10}$ and a thickness $d_{10}$. To ensure a functional label as described above, a label having defined dimensions may be tested with the above-described method. The method described above may be used to ensure that the label structure will behave as described above, such that a visual indication of the face layer deformation is observed upon removal of the label for the first time from an adhesion surface. While face layer deformation is observed upon removal of the label for the first time, the label remains in one piece due to the undivided core layer, which core layer however may be deformed permanently or non-permanently. The method described above may also be used to ensure that the label does not deform prematurely in use, and only deforms as described above upon removing the label for the first time from a package surface. To ensure a functional core layer and face layer behavior of a label as described above, it is possible to test the label prior to attachment on a surface of a package. The face layer deformation and/or core layer deformation of a label may be observed as a result of pulling force $F_N$ generated onto the label structure by means of a mechanical testing apparatus, such as dynamic mechanical analyser (DMA), for example.

The removable label may be used as a tamper-evident seal. The properties of the tamper-evident seal may be selected such that it is difficult or impossible to separate the label from the package without damaging the label, while the surface of the package remains undamaged. Separating the label from the package may, at a very high probability, cause visually detectable damage to the label. This may make re-use of the label more difficult. An unaltered label on the surface of the package may be interpreted to be an indication that the label has not been tampered. An unaltered label placed over a seam on the package may be interpreted to be an indication that the package has not been tampered. An unaltered label placed over a seam on the package may be interpreted to be an indication that the contents of the package have not been tampered. In other words, a label detached from a package cannot be reattached to the same or another package such that the resulting combination does not have visually detectable damage.

The properties of the removable label may be selected such that separating the label away from an adhesion surface of the package causes visually detectable fracturing of a label layer, such as a mosaic like pattern or structure. The fracturing layer may be denoted as a face layer. Face layer may be an outermost layer of the label, i.e. a surface layer. A face layer may contain graphical elements, such as text, barcode information or figures. The graphical elements may be provided, for example by printing or by writing with ink. Separating the label from the package surface may inevitably cause visual indications to the label, which may make unauthorized opening of the package more difficult. The materials for each layer may be selected such that when a pulling force greater than a minimum breaking force needed to break the face layer generated on the label, the face layer is converted from a continuous into a non-continuous face layer having a mosaic like structure. The non-continuous face layer may comprise one or more surface portions, separated by one or more visible fracture lines. A label, when removed from an adhesion surface, may comprise a non-continuous face layer having a mosaic like structure and one or more markings, such as text or graphical elements provided on the face layer surface, which markings may be visually recognizable, despite the mosaic like structure of the face layer. The non-continuous face layer may be used to indicate a damaged label or an opened package. However, a label comprising a non-continuous face layer may still be used as an information carrier. The removed label may be, for example, re-attached to the package, despite the non-continuous face layer.

In an embodiment, the package may be used as a part of a package system with the label. Consequently, the label attached to the package may be a self-adhesive label comprising an adhesive layer. The adhesive layer may comprise a pressure sensitive adhesive. The adhesive layer and the core layer material may be selected such that the label can be detached from the package without any visually detectable residues of the label remaining on the surface of the reusable package. The label may comprise a face layer suitable for carrying information such as graphics or text, which may be arranged for example by printing on the surface. The label may comprise a face layer having a surface consisting of non-transparent material. The label may comprise a face layer having a surface consisting of semi-transparent material. The label may comprise a face layer providing contrast such that the face layer differs visually from the core layer. The label may comprise a face layer providing contrast such that any graphics or text applied on the face layer surface may be visible and may be recognized. The contrast may be provided, for example by a colour, such as white, black, blue green, red or other colour, which differs from the colour of the core layer and/or the colour of the material used for forming the graphics or text on the face layer surface. Separating the entire label from the package in a single piece may make re-use of the package easier.

In an embodiment, the package may be used as a part of a tamper evident system with the label. Consequently, the label attached to the package may in addition to the package system described above have a face layer with a continuous surface. The adhesive layer material, the core layer material and the face layer material may be selected such that the removable label cannot be detached from the package without causing visually detectable damage to the face layer of the removable label. The materials may be selected such that when the label is detached first time from the surface of the package, a non-continuous surface is formed on the face layer of the detached label comprising one or more visually detectable surface portions defined by fracture lines. As discussed in the embodiment above, the face layer may differ from the core layer, such that the visually detectable damage to the face layer is improved. The label may comprise a face layer providing visual contrast such that fracture lines formed face layer surface may be visible and may be recognized. The contrast may be provided, for example by a colour, as discussed in the embodiment above. The contrast may further or alternatively be provided by means of an refractive index difference arranged to cause bending of light, such that when incident light entering a non-continuous face layer material arrives on a fracture line, the fracture line forms an interface wherein the propagation direction of the incident light is altered. The bending of light at the fracture line interface of the face layer highlights the fracture line from the surrounding face layer surface material.

BRIEF DESCRIPTION OF THE DRAWINGS

In the following examples, several variations will be described in more detail with reference to the appended drawings, in which

Fig. 1　shows, by way of example, in a two dimensional view, a label and a package comprising label residues,

Fig. 2a　shows, by way of example, in a cross-sectional side view, structure of a label on a release liner,

Fig. 2b　shows, by way of example, in a cross-sectional side view, an alternative structure of a label,

Fig. 2c　shows, by way of example, in a cross-sectional side view, structure of a label attached to an adhesion surface of a package,

Fig. 3　shows, by way of example, in a three dimensional view, a combination of a package and a label,

Fig. 4a　shows, by way of example, in a cross-sectional side view, combination of a package and a label, and a pulling force $F_N$ detaching the label from the package surface,

Fig. 4b　shows, by way of example, in in a cross-sectional side view, dimensions of a removable label and effects of a pulling force $F_N$ produced onto the label structure,

Fig. 4c　shows, by way of example, in a top view, dimensions of a removable label and effects of label detachment,

Fig. 5　show by way of example, the tensile strain of a core layer and a face layer as a function of stress due to an instantaneous pulling force,

Fig. 6　show by way of example, the tensile strain of an adhesive layer attached to the package surface as a function of stress due to an instantaneous pulling force,

Fig. 7a　shows, by way of example, in a top view, an undamaged removable label, Fig. 7b shows, by way of example, in a top view, a damaged removable label after detaching the label from the package surface,

Fig. 8a　shows, by way of example, in a top view, a first side of a removable label,

Fig. 8b       shows, by way of example, in a top view, a stack of two labels comprising a first label and a second label beneath the first label,

Fig. 8c       shows, by way of example, in a top view, a second side of a removable label,

Fig. 9       shows, by way of example, in a top view, a removable label comprising a perforation line distinguishing two parts of the label.

In the figures SX, SY and SZ denote orthogonal directions.

DETAILED DESCRIPTION

A label may be manufactured and arranged on a release liner. A release liner is typically a product having a dehesive surface, referred to as a release layer. The release layer is used to provide stable release properties of the adhesive label from the dehesive release liner. A typical release layer may comprise a silicone based polymer structure. Facestock material refers to material manufactured on a release liner, having the structure of a label, and from which one or more labels may be obtained, for example by die-cutting. Properties of a label and/or of a facestock material may be determined by using standardized test methods, such as described in the FINAT technical handbook comprising test methods for self-adhesive materials (9th edition, year 2014). Numerical values characterizing the properties of a label refer to values obtained by FINAT methods, unless otherwise specified.

A removable label may comprise a core layer. The core layer has a first side and a second side. The first side of the core layer may serve as a surface for attaching adhesive layer. The second side of the core layer may serve as a surface for attaching a face layer. Adhesive layer may be formed of an adhesive material. The adhesive material may be self-adhesive, such as a pressure sensitive adhesive.

A removable label may comprise one or more core layers. The core layers may be arranged such that an intermediate layer is provided between the core layers. The intermediate layer may be a face layer.

Composition of an adhesive layer in this context refers to an adhesive, i.e. to a composition which has a tendency to adhere towards an object surface by means of chemical adhesion or dispersive adhesion. Adhesion of an adhesive depends on the type of the adhesive and the used surface material. A preferable adhesive is a self-adhesive adhesive, which may be attached and removed from the intended package surface material. The strength of the adhesive may increase after the label has been attached to the package. Preferably, the adhesive is a pressure sensitive adhesive of a permanent type, such that the label is not detached prematurely from the package surface. Permanent adhesive has a high tack value. The adhesion strength of a pressure sensitive permanent adhesive towards the surface develops as a function of time, referred to as an adhesive set-up time. For example, a sufficient strength of the bond between the label and the package may be attained almost immediately when pressing, within minutes or within half an hour after the adhesive is brought into contact with the package surface. The adhesive may adhere to the surface at a minimum temperature of -40°C or higher, such as at a minimum temperature of -20°C or higher. The adhesive may adhere to the surface at a maximum temperature of 100°C or lower, such as at a maximum temperature of 80°C or lower. The adhesive may adhere to the surface, for example in the range of -20°C to 100°C, or in the range of -40°C to 60°C. The temperature range wherein the adhesive may adhere to the surface is referred to as the service temperature of the adhesive. The adhesive layer may comprise an elastomer component, such as an acrylic, ethylene-vinyl acetate or a styrene block copolymer. The final adhesive strength may form for example in less than 4 hours of attachment. The adhesive strength may be expressed by a tack value, as described above. The tack value of an adhesive may be determined according to a FINAT test method (9th edition, 2014) for loop tack measurement, referred to as FTM9. The tack value of an adhesive may be determined from a combination of an adhesive layer attached to a core layer or an adhesive layer attached to a label. An adhesive of a permanent type suitable for the removable label LAB1 may have a tack value of 10 or more, preferably 13 or more, most preferably 16 or more. A pressure sensitive adhesive of a permanent type may have a tack value in the range of 10 to 25, when determined by using FTM9.

An adhesive for the label LAB1 may comprise, for example:

- rubber based hotmelt adhesives having a peel value of at least 4 on card board or a peel value of at least 15 on polyethylene (PE),
- permanent acrylic adhesives having a peel value of at least 8 on polypropylene (PP) or a peel value of at least 10 on polyethylene terephthalate (PET),
- removable UV acrylic adhesives having a peel value of at least 3 on polyethylene (PE) or a peel value of at least 10 on steel, or
- removable water based "microsphere" adhesives

**[0027]**  , when determined by using the FINAT test method FTM9. The suitability of an adhesive may be tested on different surface materials, depending of the intended package material for the label.

An adhesive anchorage failure testing may be used to determine that the intended package material surface remains free of any adhesive residues or combinations of adhesive and other layers of the label.

The core layer may be polymeric. The core layer may be a thermoplastic polymer film. A preferable core layer has compatibility towards the adjacent adhesive layer and the face layer, such that the adhesive layer and/or the face layer adhere to the core layer. The compatibility may be chemical adhesion. Chemical adhesion may be e.g. bonding, such as covalent bonding. The compatibility may be physical adhesion. Physical adhesion may be e.g. bonding by weak forces, such as wan der Waals forces, or bonding by dispersive adhesion or by a tie layer. Preferably, the core layer is an elastic polymer film having tensile strength and high elongation at break values, when compared to the properties of the face layer. The core layer may comprise, for example, a homopolymer, a copolymer or a modified polymer of unsaturated aliphatic hydrocarbons. The core layer material may comprise, for example, polyethylene, polypropylene, ethylene-vinyl acetate (EVA), polystyrene, polyamide, polyester, and combinations thereof. Among the preferred materials are ethylene-vinyl acetate and C2 - C4 polyolefins, polyethylene and polypropylene being most preferred polyolefins.

The core layer may comprise polymeric material having an elongation at break value of equal to or higher than 20%, preferably equal to or higher than 40%, such as equal to or higher than 100%, such as equal to or higher than 200% or equal to or higher than 400%. The core layer may comprise polymeric material having an elongation at break value in the range of 10% to 1000%, preferably in the range of 20% to 750%. The core layer may comprise polymeric material having a tensile strength at yield equal to or higher than 4 $N/mm^2$, preferably equal to or higher than 8 $N/mm^2$.

The core layer may consist essentially, for example, of

-  ethylene-vinyl acetate (EVA) having an elongation at break value equal to or higher than 200%, preferably equal to or higher than 500%, such as in the range of 200 to 750% and a tensile strength at yield equal to or higher than 4 $N/mm^2$, preferably equal to or higher than 8 $N/mm^2$, such as in the range of 4 to 41 $N/mm^2$, or
-  polyethylene (PE) with elongation at break value equal to or higher than 200%, preferably equal to or higher than 400%, such as in the range of 200 to 1000% and tensile strength at yield equal to or higher than 4 $N/mm^2$, preferably equal to or higher than 8 $N/mm^2$, such as in the range of 4 to 40 $N/mm^2$.

In the following text, the tensile strength values given refer to ultimate tensile strength values, unless otherwise indicated, as above. Ultimate tensile strength denotes the maximum stress that a material can withstand while being stretched or pulled before failing or breaking. A yield strength or yield point of a material denotes the stress at which a material begins to deform plastically. On a stress-strain curve below the yield point, stress applied to a material provides elastic deformation, such that the material returns to its original shape when the applied stress is removed.

The core layer may be orientable in machine direction and/or transverse direction, such that the core layer may be arranged to have a first tensile strength in machine direction and a second tensile strength different from the first tensile strength in transverse direction. Orientation allows a selection of the properties of the core layer, for example, based on the size and shape of the final label and/or orientation of printed information intended to be used on the label. The properties of the core layer, including the orientation, affect how the face layer material breakage becomes indicated visually. For example, if the label is intended to carry bar code, then selecting the direction where the core layer allows more deformation (stretching) properly, it can be arranged that the bar code will become more likely unreadable upon removal of the label.

The face layer may be polymeric. The face layer may be of paper. The face layer may be a coating comprising, or consisting of, printing ink. Preferably, the face layer is of a material having low elongation at break values, when compared to the properties of the core layer. In other words, the face layer is more brittle than the core layer. The face layer may be a polymeric film. The face layer may be, for example polyvinyl chloride (PVC) or polystyrene (PS) having lower elongation at break values than the core layer. Alternatively, the face layer may be a paper layer attached to the second side of the core layer through a tie layer. Alternatively, the face layer may be a printed layer or a coated layer. When a printed or a coated layer is used, the face layer may be attached to the second side of the core layer through a tie layer. The tie layer may be adhesive material. The face layer may be arranged to be only partially in contact with the core layer. A partial contact of the face layer to the core layer may comprise, for example, attachment of the face layer to the core layer by means of stripes or spots comprising adhesive material. By partial contact of adhesive material the pattern of the face layer breaking may be controlled, such that fracture lines may be formed on the face layer in a predetermined direction. By partial contact of adhesive material the minimum breaking force of the face layer breaking may further be controlled, such that a smaller pulling force may be needed to break the face layer. The adhesive material may be an adhesive such as described above. The face layer may be, for example a coating applied on top of the core layer or the tie layer, which coating is subsequently dried or cured. When selecting a combination comprising a face layer and a core layer, the resulting combination attached together should be such that when subjected to a pulling force $F_N$, the face layer should break before the core layer.

The face layer material suitable for use on a removable label LAB1 may be, for example

- a film consisting of polyvinyl chloride (PVC), the film having a thickness of 50 micrometers and a tensile strength in the range of 1 kN/m, and a low elongation at break value,
- paper having a tensile strength in the range of 1 to 5 kN/m in machine direction, or
- a printing ink layer having a brittleness such that when applied on second side of the core layer of the label LAB1 and the label LAB1 is detached from an adhesion surface, the printing ink layer breaks.

Referring to Fig. 2a, the label LAB1 may be manufactured from a facestock, for example by die cutting a facestock. A method for manufacturing a label may comprise

- providing a release liner BCK1,
- applying an adhesive on the surface $S_{BCK}$ of the release liner to form an adhesive layer ADH1,
- attaching a core layer CLR1 having a first side and a second side on the adhesive layer ADH1,
- applying a face layer SLR1 on the second side of the core layer CLR1 to form a facestock, and
- forming a removable label LAB1 having dimensions from the facestock.

The label LAB1 may be optionally attached to a release liner BCK1. The label LAB1 may be manufactured on a release liner BCK1 having a dehesive surface $S_{BCK}$. The release liner BCK1 may protect the adhesive material ADH1 during storage and/or transportation. A release liner BCK1 comprising a facestock or multiple labels LAB1 may be wound on a roll. A release liner BCK1 comprising a facestock or multiple labels LAB1 may be stacked. A release liner BCK1 may thus also protect the face layer SLR1 during storage and/or transportation. A facestock may also be manufactured as a linerless facestock, wherein a tape-like facestock comprises a release layer applied on the surface of the face layer SLR1, such that the face stock may be arranged on a self-wound roll without a release liner BCK1.

A release liner BCK1 may be referred to as a backing. Paper material suitable for use as backing for manufacturing of a removable label LAB1 comprise, for example, glassine or Kraft paper having a silicone based release coating. Plastic material suitable for use as backing for manufacturing of a removable label LAB1 comprise, for example, polyester or polypropylene having a dehesive release coating. The label LAB1 may comprise a core layer CLR1. Adhesive material ADH1 may be attached to the first side of the core layer CLR1. A face layer SLR1 may be attached to the second side of the core layer CLR1. The face layer SLR1 may be attached to the second side of the core layer CLR1 by coextrusion, wherein two or more layers have been extruded simultaneously to provide a multilayer structure, wherein the formed layers have been strongly attached to each other.

Referring to Fig. 2b, the label LAB1 may comprise a core layer CLR1. Adhesive material ADH1 may be attached to the first side of the core layer CLR1. A face layer SLR1 may be attached to the second side of the core layer CLR1 through a tie layer ADH2. The tie layer ADH2 may be adhesive material. The tie layer may be an ADH2 an adhesive layer. Therefore, the face layer SLR1 may be attached to the core layer CLR1 by lamination.

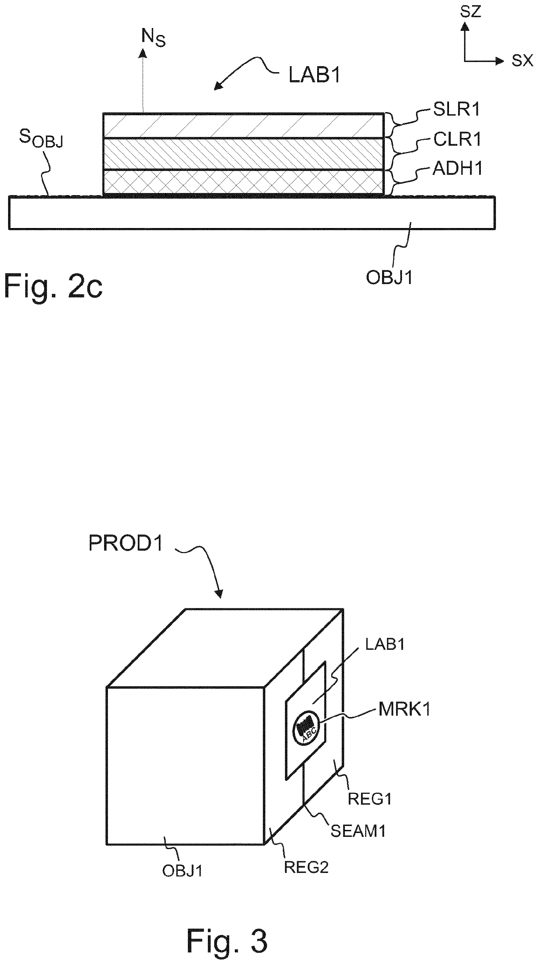

Referring to Fig. 2c, the label LAB1 may be attached on a package OBJ1, which may be a reusable package. The release liner may be separated from the label LAB1 prior to attaching the label LAB1 to a package OBJ1. The adhesive ADH1 may be selected to adhere to the adhesion surface $S_{OBJ}$ of the package OBJ1. In Fig 2c, the arrow denotes a surface normal $N_S$ of the label LAB1 surface in direction SZ. The surface normal $N_S$ is substantially perpendicular to the direction of the label LAB1 surface. A direction substantially parallel with the surface of the label LAB1 may be the length direction SX or the width direction SY of the label LAB1.

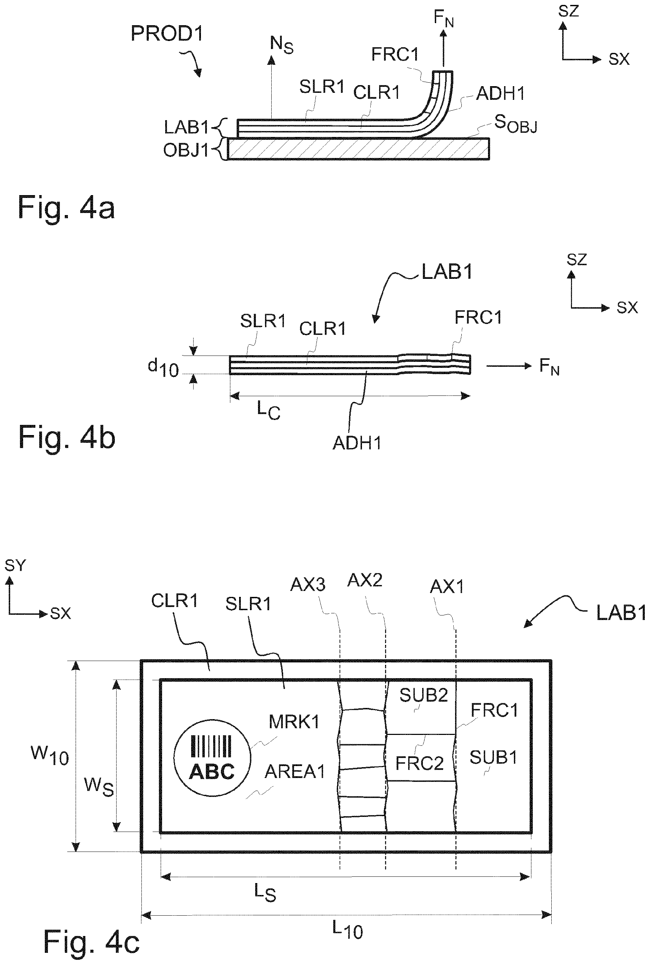

The face layer SLR1 may be coloured. Contrast for any markings on the face layer SLR1 may be provided by selecting a background colour of the face layer SLR1. The colour of the face layer SLR1 or, when the skin layer is semi-transparent, the combination of the face layer SLR1 and the core layer CLR1 colours, forms a background for any graphics or text applied on the face layer surface. The label may comprise a face layer having a background contrast such that any graphics or text applied on the face layer surface may be visible from the background and may be recognized. The face layer SLR1 may comprise one or more visually detectable colors. Preferably the face layer SLR1 comprises a single colour. The face layer SLR1 may be selected such that the label LAB1 surface has a selected color, e.g. white, red, green, blue or black. The face layer SLR1 surface may contain markings. The markings, such as text or graphics, may be visually detectable. Opacity of the label LAB1 surface may be used to improve the contrast for any markings provided on the face layer SLR1. When the marking contain information, such as encoded information intended to be detectable by machine vision, for example information in a bar code format, a high contrast facilitates the recognition and reliable determination of the markings. The label LAB1 may comprise a face layer SLR1 providing contrast such that the face layer differs visually from the core layer, when the label LAB1 comprises a non-continuous face layer SLR1 having a mosaic like structure. The core layer CLR1 and the adhesive layer ADH1 may be substantially transparent. The opacity value of core layer CLR1 and the adhesive layer ADH1 may be equal to or less than 10%, when determined by an ISO test method 2471. When the core layer CLR1 is transparent, a substantially non-transparent face layer SLR1 is preferred. A non-transparent face layer SLR1 having a colour differs from a substantially transparent core layer, such that the presence of fracture lines may be detected visually with ease. A substantially non-transparent layer in this context refers to opacity value of 80% or higher, when determined by the ISO test method 2471. Alternatively, the label LAB1 may comprise a face layer SLR1 having a surface consisting of semi-transparent material, and the core layer CLR1 and/or the adhesive layer ADH1 may consist of semi-transparent or non-transparent material. A semi-transparent layer in this context refers to opacity value of higher than 10% and less than 80%, when determined by the ISO test method 2471. Contrast between the face layer SLR1 and the core layer CLR1 may be provided, for example, by selecting a first colour of the face layer SLR1 material and a second colour of the core layer CLR1 material, which second colour differs from the first colour. The colours of the face layer SLR1 and the core layer CLR1 may be selected such that when the face layer SLR1 is converted from a continuous into a non-continuous face layer SLR1 having a mosaic like structure, the face layer SLR1 is visually detectable. A non-continuous face layer SLR1 having a mosaic like structure comprises fracture lines, which may extend through the face layer SLR1 down to the second side of the core layer. For example, when the distance separating the skin layer sides of a fracture line is wide enough for the colour of the core layer CLR1 to become visible through the fracture lines, the second colour of the core layer CLR1 beneath the face layer SLR1 may be used to enhance the visual detection of the fracture lines. When the colour of the core layer CLR1 has a high contrast in comparison to the colour of the face layer SLR1, the non-continuous face layer SLR1 may be easier to detect visually. The first colour of the face layer SLR1 material may further differ from the colour of the material used for forming any graphics or text on the face layer SLR1 surface. When the distance separating the skin layer sides of a fracture line is small, such as when the core layer CLR1 has experienced reversible stretching wherein the core layer CLR1 has not been permanently deformed, refraction of light may be used for visual detection of the presence of a non-continuous face layer SLR1. The presence of a non-continuous face layer SLR1 having a mosaic like structure comprising fracture lines may be detected by means of bending incident light caused by two materials having different index of refraction. Incident light having a first direction of propagation in a first media, such as air, having a first refractive index, experiences refraction upon entering a second media, such as the face layer SLR1, having a second refractive index, which is different from the first refractive index. In particular when the incident light used for illuminating the label LAB1 arrives on the face layer SLR1 at an oblique angle, any obstacle formed on the path may disturb the propagation of light. The face layer SLR1 material may be selected to have a refractive index, i.e. the second refractive index, higher than the refractive index of air, such that the formed fracture line is highlighted from the face layer SLR1 by means of bending incident light used for illuminating the label LAB1. As the fracture line FRC1 extends through the face layer as shown in Figures 4a and 4b, both transparent and non-transparent face layer SLR1 material may be used. The opacity value of the face layer SLR1 material does not play a role in visual detection of the fracture lines, when the face layer SLR1 is the outermost layer of the removable label LAB1. Light travels a small distance also in non-transparent layers which are thin, such as the face layer SLR1. By illuminating the label LAB1 with an incident light, a fracture line FRC1 on the surface of the face layer may be arranged to act as an obstacle for the incident light. When the incident light meets the fracture line, bending of light occurs due to refractive index difference on the interface between the two materials. In a typical situation, the outermost layer of the label LAB1 is in contact with air from one side, and with an inner layer of the label LAB1 from the other side. The materials used in the face layer SLR1 typically have a higher refractive index value compared to air. The refractive index of the face layer SLR1 may be selected such that the incident light having a first direction of propagation changes the direction of propagation, i.e. obtains a second direction of propagation, when entering from the first media, such as air, to the second media, such as the face layer SLR1, on the interface between the two materials. The refraction of light on the face layer SLR1 may be observed as contrast difference, wherein the fracture lines are brighter or darker that the surrounding surface of the face layer SLR1. The observed change of light intensity on the fracture line may depend on the observation angle. For example, a fracture line may comprise both a brighter border and a darker border that the surrounding surface of the face layer SLR1, depending of the illumination angle of the incident light and the width of the fracture line. In general, when the face layer SLR1 is the outermost layer of the label LAB1, bending of light may be used to highlight the fracture line borders, such that the fracture line is easy to detect visually from the surface of the face layer.

Referring to Fig. 3, the label LAB1 may be attached to a package OBJ1 to form a combination PROD1. The label LAB1 may be part of the combination PROD1 of a removable label LAB1 and a package OBJ1. The combination PROD1 may be called e.g. as a sealed package. The package OBJ1 may be a reusable package or a reusable container. The package OBJ1 may contain products inside. The package OBJ1 may be used more than once. The package OBJ1 may be delivered and returned several times, for example by using a mailing service or a courier service. Each time the package OBJ1 is re-used, the package may be labeled with a new label LAB1.

The package OBJ1 may be e.g. a box, a bag or an envelope. The package OBJ1 may consist of a plastic polymer, such as thermoplastic polymer. The package may comprise one or more sides. The package OBJ1 may comprise one or more covers. The package OBJ1 may comprise a lid, which may be joined to a side of the package by a flexible hinge.

The package OBJ1 may comprise an opening joint SEAM1. The opening joint SEAM1 may be e.g. a sliding joint defined by a lid and a side wall. When the joint is not sealed with the label LAB1, the joint may be opened and closed several times without causing visual damage to the package. The label LAB1 may be attached to the package OBJ1 such that the opening joint SEAM1 is located between two attachment regions REG1, REG2. The package OBJ1 may comprise one or more openings, for example holes. The opening may be separate from an opening joint used to open and close the package when loading or unloading the contents of the package. The opening may serve, for example, as a viewing hole separate from the primary opening position. The opening may be used, for example, to inspect the contents of a sealed package without opening the seal. The removable label LAB1 may be used to cover such an opening. The removable label LAB1 may be used to seal such an opening. The removable label LAB1 may form part of a package OBJ1 comprising an opening, such that when the removable label LAB1 is attached to the package OBJ1 to cover the opening, the package OBJ1 becomes sealed. Two or more removable labels LAB1 may form part of a package OBJ1 comprising an opening, such that when a first removable label LAB1 is attached to the package OBJ1 to cover the opening, and the second removable label LAB1 is attached to the package OBJ1 to seal the opening joint, the package OBJ1 becomes sealed. The opening may be revealed by removing the attached label LAB1, which may convert the face layer SLR1 of the label LAB1 into a non-continuous having a mosaic like structure.

The package OBJ1 may contain a substance. The substance may be a product. The package OBJ1 may be suitable for containing said substance. The package OBJ1 may comprise one or more markings associated with said substance. The markings of the package OBJ1 and/or the markings of the removable label LAB1 may indicate e.g. that the package contains a purchased product. The sealed package may contain e.g. a purchased product. The markings of the package OBJ1 and/or the markings of the removable label LAB1 may indicate e.g. that the package contains a consumer product. The sealed package may contain e.g. a consumer product. The markings of the package may indicate e.g. that the package contains products purchased from an internet store. The sealed package may contain e.g. products purchased from an internet store. The package OBJ1 may contain a substance selected from the group consisting of medical products, cosmetic product, decorative products, electronic devices, foodstuff or clothes. The markings of the package OBJ1 and/or the markings of the removable label LAB1 may indicate e.g. that the package contains forensic material of a criminal investigation. The sealed package may contain e.g. samples regarded as forensic evidence.

The package OBJ1 may comprise an opening portion. The opening portion may be implemented by an opening joint, which can be opened without damaging the package OBJ1. In the combination PROD1, the label LAB1 may be used for carrying information and/or for sealing the package OBJ1. The face layer of the label LAB1 may be printable. Markings MRK1 may be applied on face layer surface. The package OBJ1 may comprise a first attachment region REG1. The first attachment region REG1 may be a continuous surface on the package. For example, the first attachment region REG1 may be located on a side of the package OBJ1. The label LAB1 may be attached on a first attachment region REG1 of the package OBJ1. The package OBJ1 may comprise a second attachment region REG2. The second attachment region REG2 may be a second continuous surface on the package OBJ1 separated from the first continuous surface by an opening joint SEAM1. The label LAB1 may be attached on the first attachment region REG1 and the second attachment region REG2 of the package OBJ1. For example, the first attachment region REG1 may be located on a side of the package, and the second attachment region REG2 may be located on a lid or cover of the package. The label LAB1 may be attached to the package such that the opening joint SEAM1 of the package is located under the label LAB1. When the label LAB1 is attached to the package OBJ1 such that the label LAB1 is located both on the first attachment region REG1 and the second attachment region REG2, the label may be used as a sealing label. The label LAB1 may be attached to the package such that the package OBJ1 cannot be opened without separating the label LAB1 from the first attachment region REG1 and/or from the second attachment region REG2. The label LAB1 may be attached to the package such that the opening joint SEAM1 cannot be opened without breaking the label LAB1, without damaging the package OBJ1, and/or without separating the label LAB1 from at least one of the first attachment region REG1 and the second attachment region REG2.

Referring to Figs. 4a, 4b and 4c, the label LAB1 may have an initial thickness $d_{10}$. The initial thickness $d_{10}$ of the label LAB1 may be e.g. in the range of 50 micrometers ($\mu$m) to 3000 micrometers ($\mu$m).

The label LAB1 may have an initial length $L_{10}$ and an initial width $W_{10}$. The initial length $L_{10}$ and the initial width $W_{10}$ may independently be e.g. in the range of a few millimeters to tens of centimeters, such as in the range of 0.5 cm to 30 cm. The width and length of the core layer CLR1 may be equal to the initial length and width of the label LAB1. The face layer SLR1 may have an initial length $L_S$ and an initial width $W_S$. The width and length of the face layer CLR1 may be equal to or less than the initial length $L_{10}$ and an initial width $W_{10}$ of the label LAB1. The face layer SLR1 of the label LAB1 may comprise one or more markings MRK1.

The label LAB1 may be pulled by a pulling force $F_N$. The pulling force $F_N$ may be used to determine the amount of force needed to break the face layer SLR1. The pulling force $F_N$ may be used to determine the amount of force needed to deform the core layer CLR1 plastically. The pulling force $F_N$ may be used to determine the amount of force needed to break or divide the label LAB1 into parts. When determining the properties of a label LAB1, the label may be pulled by a pulling force $F_N$ in a direction substantially parallel with the surface of the label LAB1, as shown in Figure 4b. A direction substantially parallel with the surface of the label LAB1 may be the length direction SX or the width direction SY of the label LAB1. When a removable label LAB1 and a package OBJ1 form a combination PROD1 as shown by way of an example in Figure 4a and in Figure 3, the pulling force $F_N$ may be used to determine the amount of force needed for pulling the label LAB1 off from the adhesion surface $S_{OBJ}$. When determining the detachment properties of a label LAB1 from a combination PROD1, the label may be pulled by a pulling force $F_N$ in a direction substantially parallel with the surface normal $N_S$ of the label LAB1. The pulling force $F_N$ may be used for determining the amount of force needed to detach the adhesive layer ADH1 from the adhesion surface $S_{OBJ}$ in a combination PROD1, when the label LAB1 is stretched in a direction substantially parallel with the surface normal $N_S$ of the label LAB1 surface. A pulling force $F_N$ may be used to test that the adhesive layer ADH1 is removable from the adhesion surface $S_{OBJ}$ without damage to the adhesion surface $S_{OBJ}$. The properties of the label LAB1 may be selected such that the label LAB1 is separated from the package OBJ1 surface in a single piece, such that the adhesive layer ADH1 and the core layer CLR1 stay together. In particular, when removing the label LAB1 from the package OBJ1 surface the adhesive layer ADH1 remains attached to the core layer CLR1 of the label LAB1, such that substantially no visual residues of the label LAB1 remain on the surface of the package OBJ1. The face layer SLR1 surface may be arranged to operate as a visual indicator of tampering. The pulling force $F_N$ may further be used for observing the tamper evident functionality of the combination PROD1, such that when the label LAB1 is pulled off from the adhesion surface $S_{OBJ}$ in a direction substantially parallel with the surface normal $N_S$ of the label LAB1 surface, the face layer SLR1 is converted into a non-continuous face layer SLR1 comprising one or more surface portions defined by one or more visually detectable fracture lines, while the core layer CLR1 remains undivided in one piece. The properties of the label LAB1 may be selected such that an attempt to separate the label LAB1 from the package OBJ1 surface causes visually detectable irreversible damage to the face layer SLR1. Pulling the label LAB1 away from the first attachment region REG1 or the second attachment region REG2 may convert a continuous face layer SLR1 into a non-continuous and irreversibly damaged face layer SLR1. The damaged face layer may comprise fracture lines, which may be for example cracks or crevices. The damaged face layer may have a mosaic like appearance, where the core layer of the label becomes partially visible via the fractures in the face layer.

The pulling force $F_N$ used to determine the amount of force needed to break the face layer SLR1 may be equal to or greater than 0.1N, such as equal to or greater than 1N or more. A testing apparatus capable for testing such forces may be used for pulling of the label LAB1, to determine the properties of the label LAB1. Such testing apparatus is for example, a Dynamic Mechanical Analyzer (DMA) capable to measure different types of deformation from a sample.

The pulling force $F_N$ may have a component, which is perpendicular to the attachment region REG1. The pulling force $F_N$ may have a component, which is parallel to the attachment region REG1. The pulling force $F_N$ may have a component, which is parallel with the normal of the attachment region REG1. The pulling force $F_N$ may be distributed by the label LAB1 and by the package surface $S_{OBJ}$ to a cross-sectional area such that the pulling force $F_N$ creates tensile stress on the label LAB1 structure. The tensile stress caused by the pulling force $F_N$ to the cross-sectional area of the label LAB1 may exceed the breaking strength $\sigma_{SLR1}$ of the face layer SLR1. The face layer SLR1 may have a relatively low breaking strength, in particular in a direction which is parallel to the outer surface of the label LAB1. The breaking strength $\sigma_{SLR1}$ may denote the ultimate tensile strength $\sigma_{SLR1}$ of the face layer SLR1 material in a direction (SX), which is parallel to the attachment region REG1 of the adhesion surface $S_{OBJ}$ of the package OBJ1. The tensile stress of the label LAB1, the core layer CLR1 or the face layer SLR1 may be determined according to DIN 53455, which is a tensile test for plastics.

Figure 4c shows, by way of an example, effects of a pulling force $F_N$ equal to or higher than a force needed to break the face layer SLR1 material produced on label LAB1. When a pulling force $F_N$ equal to or higher than a force needed to break the face layer SLR1 has been produced on a label LAB1, a continuous face layer SLR1 surface having an initial surface area AREA1 defined by the initial length $L_S$ and an initial width $W_S$ is converted into a non-continuous face layer SLR1 surface comprising one or more surface portions SUB1, SUB2. Each surface portion SUB1, SUB2 may comprise an area smaller than the initial surface area AREA1 of the face layer SLR1. At least some of the boundaries of each surface portion SUB1, SUB2 may be defined by visually detectable fracture lines FRC1, FRC2. At least one fracture line FRC1 of a surface portion SUB1, SUB2 may be substantially parallel to a longitudinal axis AX1, AX2, AX3. The longitudinal axis AX1, AX2, AX3 is perpendicular to the direction SX and/or direction SY of the generated pulling force $F_N$. When a pulling force $F_N$ is generated, some of the fracture lines FRC1 may form and/or extend in a direction perpendicular to the pulling force $F_N$ applied to the label LAB1. The width of the fracture lines FRC1, FRC2 may be equal to or less than 1 micrometer. The width of the fracture lines FRC1, FRC2 may be more than 1 micrometer, in particular when the pulling force $F_N$ applied to the label LAB1 is greater than the minimum yield force of the polymeric core layer CLR1 wherein the core layer CLR1 begins to deform plastically. The fracture lines FRC1, FRC2 may be interconnected such that a network of fracture lines FRC1, FRC2 separating surface portions SUB1, SUB2 from each other is formed. The surface portions SUB1, SUB2 defined by the fracture lines FRC1, FRC2 remain attached to the core layer CLR1 of the label LAB1, such that the label LAB1 may be removed as an entity, i.e. in a single piece without any visible or non-visible fragments or residues of the label remaining on the package OBJ1 surface. The label LAB1 may have a structure comprising or consisting of an adhesive layer ADH1, a core layer CLR1 and a face layer SLR1. The materials for each structure may be selected such that the minimum detaching force $F_{ADH1}$ of the adhesive layer ADH1 from an adhesion surface $S_{OBJ}$ is greater than the minimum breaking force $F_{SLR1}$ needed to break the face layer SLR1, wherein the minimum breaking force $F_{SLR1}$ denotes a minimum pulling force $F_N$ produced on the label LAB1 for the continuous face layer SLR1 to convert into a non-continuous face layer SLR1 having a mosaic like structure, the non-continuous face layer SLR1 comprising one or more surface portions SUB1, SUB2. Despite the non-continuous face layer SLR1 surface, an irreversibly damaged label LAB1 may comprise one or more markings MRK1 provided on the face layer SLR1 surface, which markings may remain visually recognizable. In principle, the damaged label LAB1 could be attached back to its original position on the package OBJ1. However, the non-continuous face layer SLR1 surface comprising one or more surface portions SUB1, SUB2 of the label LAB1 indicates that the label LAB1 has been separated from a package OBJ1 and re-attached, and consequently that the package OBJ1 has been tampered.

Peel adhesion of a label may be used to determine the tensile strain as the function of the stress ($\sigma$) caused by a pulling force $F_N$. Peel adhesion may be determined using a FINAT test method (9th edition, 2014) for peel adhesion of a label at 180 degrees peeling angle or at 90 degrees peeling angle, referred to as FTM1 and FTM2, respectively. Peel adhesion may further be determined using a modified FINAT test method (9th edition, 2014) for peel adhesion of a label at 0 degrees peeling angle. Figure 4a shows, by way of an example, how a method according to FTM2 may be used for determining the stress ($\sigma$) caused by a pulling force $F_N$. Figure 4b shows, by way of an example, how a method according to a modified FTM2 could be used for determining the stress ($\sigma$) caused by a pulling force $F_N$ to a label structure, using a 0 degrees angle parellel to the label surface. For the FTM1, FTM2 and modified FTM2 tests, a label LAB1 having a width $W_{10}$ of at least 25 millimeters (mm) and a length $L_{10}$ of at least 175 millimeters (mm) may be used. The test may be conducted at a room temperature of 23°C, having 50% relative humidity (RH). When the dimensions of the label are less than described in the test methods, facestock material may be used for providing a label with sufficient dimensions for the FINAT test methods.

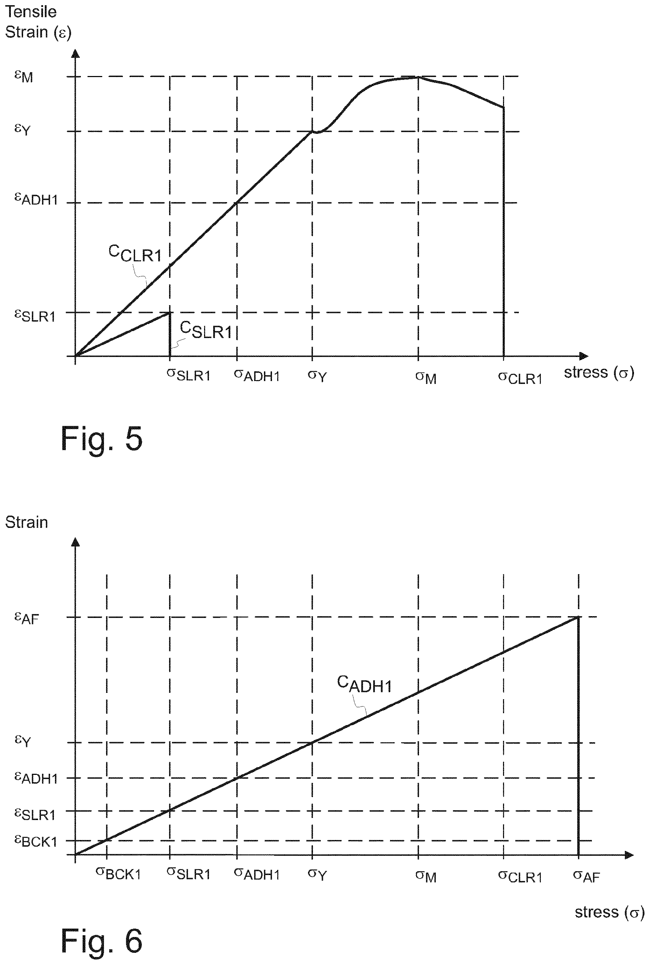

Fig. 5 shows, by way of example, the tensile strain of the polymeric core layer CLR1 and the tensile strain $\varepsilon$ of the face layer SLR1 of a label LAB1 as the function of the stress $\sigma$ caused by a pulling force $F_N$ to the label LAB1.

The stress $\sigma$ caused by a pulling force $F_N$ may be defined e.g. by the following equation:

$$\sigma\ (F_N) = \frac{F_N}{A} \tag{1}$$

, wherein A is the cross-sectional area of the label LAB1 defined by the thickness $d_{10}$ times the width $W_{10}$ of the label LAB1.

The tensile strain $\varepsilon$ represents the deformation of face layer SLR1 and/or the polymeric core layer CLR1 as the function of the stress $\sigma$ in a situation where the pulling force $F_N$ continuously increases from a zero value to elongation at break value $\sigma_{CLR1}$ of the core layer CLR1, wherein the core layer CLR1 breaks or is divided into parts. When the pulling force $F_N$ increases, the length $L(F_N)$ of the face layer SLR1 or the polymeric core layer CLR1 may change. The increase in length L due to the pulling force $F_N$ may be referred to as elongation $E(F_N)$ of the material. The elongation $E(F_N)$ may be defined e.g. by the following equation:

$$E\ (F_N) = \frac{L\ (F_N) - L_0}{L_0} \cdot 100\% \tag{2}$$

, where $L(F_N)$ denotes the final length of the face layer SLR1 or the core layer CLR1, when the label LAB1 comprising the face layer SLR1 and the core layer CLR1 has been stretched by the pulling force $F_N$. The elongation is expressed as the change in the relative length $(L-L_0)/L_0$, wherein the initial relative length $L_0$ is equal to 100% (i.e. $L_0=L$). In particular, the change in length $L(F_N)$ of the core layer CLR1 may cause permanent deformation (i.e. stretch) or non-permanent deformation (i.e elastic or reversible elongation) of the core layer CLR1. An elongation at break value denotes the elongation $E(F_N)$ of a label LAB1, face layer SLR1 and/or the polymeric core layer CLR1 wherein the a label LAB1, face layer SLR1 and/or the polymeric core layer CLR1 fractures or is divided into parts. The elongation $E(F_N)$ or elongation at break value may be determined by applying a pulling force $F_N$ to a label LAB1, face layer SLR1 and/or the polymeric core layer CLR1, which pulling force $F_N$ is substantially parallel in a direction of the label length $L_{10}$.

For example, an elongation of 20% by a force $F_N$ refers to an object having a final length of 1.2, when the initial relative length $L_0$ has been equal to 1.

The elongation $E(F_N)$ may be different on the face layer SLR1 and the core layer CLR1. The curves $C_{CLR1}$, $C_{SLR1}$ represent the amount of deformation (strain) of the face layer SLR1 and the polymeric core layer CLR1 of a label LAB1 at distinct intervals of tensile loading, indicating the amount of pulling force $F_N$.

The curve $C_{SLR1}$ shows the relative strain of the face layer SLR1 as the function of stress ($\sigma$) caused by a pulling force $F_N$ in a situation where the initial length of the label LAB1 is $L_0$ and the stress continuously increases (with time) from a zero value to a value $\sigma_{SLR1}$, which is the elongation at break point of the face layer SLR1. The curve $C_{CLR1}$

shows the relative strain of the polymeric core layer CLR1 as the function of stress $\sigma(F_N)$ caused by a pulling force $F_N$ in a situation where the initial length of the label LAB1 is $L_{10}$ and the pulling force $F_N$ continuously increases (with time) from a zero value to a value $\sigma_{CLR1}$, which is the elongation at break point of the core layer CLR1.

$\varepsilon_{SLR1}$ denotes the strain at breaking point of the face layer SLR1. In other words a minimum breaking force $F_{SLR1}$ may produce a stress $\sigma_{SLR1}$ needed to break the face layer SLR1. The strain produced at the minimum breaking force $F_{SLR1}$ may be denoted as elongation at break. At the minimum breaking force $F_{SLR1}$, the face layer SLR1 of the label LAB1 may be irreversibly damaged, as described above. While the face layer SLR1 of the label LAB1 may be irreversibly damaged by applying the minimum breaking force $F_{SLR1}$ on the label LAB1, the core layer CLR1 may remain undamaged due to a higher breaking force $F_{CLR1}$ needed for a strain $\varepsilon_{CLR1}$, denoting the elongation at break of the polymeric core layer CLR1.

$\varepsilon_{ADH1}$ denotes the strain required to detach the adhesive layer ADH1 from the surface $S_{OBJ}$ of the package OBJ1. In other words a minimum detaching force $F_{ADH1}$ may produce a stress $\varepsilon_{ADH1}$ needed to detach the adhesive layer ADH1 from the surface $S_{OBJ}$ of the package OBJ1. At the minimum detaching force $F_{ADH1}$, the label LAB1 may be removed from the package OBJ1, such that the adhesive layer ADH1 remains attached to label LAB1. The minimum detaching force $F_{ADH1}$ may be determined according to FINAT Test Method FTM2 (9th edition, 2014) for peel adhesion.

$\varepsilon_Y$ denotes the strain at yield point of the core layer CLR1. In other words, a minimum yield force $F_Y$ may produce a yield stress $\sigma_Y$. A pulling force $F_N$ smaller than minimum yield force $F_Y$ enables a reversible elongation, such that the material may return to its original shape if the load is removed. This is referred to as the elasticity. At a pulling force $F_N$ higher than minimum yield force $F_Y$ the elongation may be plastic, such that the material may be subjected to permanent deformation. In figure 5, the minimum detaching force $F_{ADH1}$ of the adhesive layer ADH1 is shown smaller than the minimum yield force $F_Y$ of the polymeric core layer CLR1, wherein the core layer CLR1 begins to deform plastically i.e. $\varepsilon_{ADH1} < \varepsilon_Y$. However, the minimum detaching force $F_{ADH1}$ of the adhesive layer ADH1 may be equal to or higher than the minimum yield force $F_Y$ of the polymeric core layer CLR1, wherein the core layer CLR1 begins to deform plastically, i.e. $\varepsilon_{ADH1} \geq \varepsilon_Y$.

$\varepsilon_M$ denotes the maximum strain of the core layer CLR1. In other words, a maximum force $F_M$ may produce a maximum stress $\sigma_M$, denoted as the ultimate tensile stress. When the core layer CLR1 is subjected to the maximum strain, necking and elongation occur rapidly until the polymeric material breaks or fractures.

$\varepsilon_{CLR1}$ denotes the strain at breaking point of the polymeric core layer CLR1. In other words a minimum breaking force $F_{CLR1}$ may produce a stress $\sigma_{CLR1}$ needed to break the core layer CLR1. At the minimum breaking force $F_{CLR1}$, the label LAB1 may be broken into two or more pieces. The minimum detaching force $F_{ADH1}$ of the adhesive layer ADH1 may be smaller than the breaking force $F_{CLR1}$ needed to break the core layer CLR1. In an embodiment, the maximum strain $\varepsilon_M$ of the core layer CLR1 may be higher than the strain $\varepsilon_{CLR1}$ at breaking point of the polymeric core layer CLR1 needed to break the core layer CLR1 e.g. due to rapid necking before breaking.

In the label LAB1 structure, $\varepsilon_{SLR1} < \varepsilon_{ADH1} < \varepsilon_{CLR1}$ such that $F_{SLR1} < F_{ADH1} < F_{CLR1}$.

In the label LAB1 structure, $\varepsilon_{SLR1} < \varepsilon_{ADH1} < \varepsilon_Y < \varepsilon_M$, such that $F_{SLR1} < F_{ADH1} < F_Y < F_M$. In the label LAB1 structure, $\varepsilon_{SLR1} < \varepsilon_Y < \varepsilon_{ADH1} < \varepsilon_M$, such that $F_{SLR1} < F_Y < F_{ADH1} < F_M$.

A removable label LAB1 attachable to an adhesion surface $S_{OBJ}$ may thus comprise a polymeric core layer CLR1 having a first side and a second side, an adhesive layer ADH1 on the first side of the core layer CLR1, and a face layer SLR1 on the second side of the core layer CLR1. When an alternative label layer structure is desired, the order of the layers relative to each other may be changed. For example, the amount of layers may be increased, such that the face layer is attached between two core layers by means of tie layers. The removable label LAB1 comprises width, length and thickness dimensions $W_{10}$, $L_{10}$, $d_{10}$, wherein the composition of the adhesive layer ADH1, the material of the core layer CLR1, and the material of the face layer SLR1 have been selected such that the minimum detaching force $F_{ADH1}$ of the adhesive layer ADH1 suitable for removing the label LAB1 from the adhesion surface $S_{OBJ}$ of a package OBJ1 is greater than the minimum breaking force $F_{SLR1}$ of the face layer SLR1 needed to break the face layer SLR1 of the label LAB1. The adhesive layer ADH1 may thus be used for attaching the label LAB1 to a package OBJ1 surface. The minimum detaching force $F_{ADH1}$ is relative to the tack value of the adhesive layer ADH1 towards the adhesion surface $S_{OBJ}$. The package OBJ1 may be selected from various materials, such as polymer, glass, metal or composite material. The package OBJ1 may be reusable. The tack value of the adhesive layer ADH1 may be selected based on the properties of the adhesion surface $S_{OBJ}$ of the package OBJ1. For example, when measured from a glass surface, the adhesive layer may have a tack value in the range of 2 to 25. The suitability of the adhesive having a given tack value may be determined by means of an adhesion test, as described above.

The composition of the adhesive layer ADH1, the material of the core layer CLR1, and the material of the face layer SLR1 may further have been selected such that the minimum detaching force $F_{ADH1}$ of the adhesive layer ADH1 is less than the breaking force $F_{CLR1}$ needed to break the core layer CLR1, such that the core layer CLR1 remains undivided upon detachment of the removable label LAB1 from the adhesion surface $S_{OBJ}$.

The composition of the adhesive layer ADH1, the material of the core layer CLR1, and the material of the face layer SLR1 may further have been selected such that the minimum detaching force $F_{ADH1}$ of the adhesive layer ADH1 is less than the minimum yield force $F_Y$ of the polymeric core layer CLR1 wherein the core layer CLR1 begins to deform plastically, such that a tensile strain $\varepsilon$ experienced by the core layer CLR1 upon detachment of the removable label LAB1 from the adhesion surface $S_{OBJ}$ is non-permanent. When the tensile strain $\varepsilon$ experienced by the core layer CLR1 upon detachment of the removable label LAB1 from the adhesion surface $S_{OBJ}$ is non-permanent, the core layer CLR1 is deformed reversibly, such that the face layer SLR1 of the label LAB1 is converted into a non-continuous face layer SLR1 having a mosaic like structure indicating the detachment of the label, while the core layer CLR1 remains undivided. When the tensile strain $\varepsilon$ experienced by the core layer CLR1 upon detachment of the removable label LAB1 from the adhesion surface $S_{OBJ}$ is permanent, the core layer CLR1 is deformed irreversibly, such that the face layer SLR1 of the label LAB1 is converted into a non-continuous face layer SLR1 having a mosaic like structure indicating the detachment of the label, and the core layer CLR1 is deformed, but remains undivided.

A method for manufacturing a removable label LAB1 for an adhesion surface $S_{OBJ}$ may comprise:

- selecting an adhesive layer ADH1 having a tack value suitable for the adhesion surface $S_{OBJ}$ by means of an adhesion test, to obtain an adhesive layer ADH1 removable from the adhesion surface $S_{OBJ}$ without damage to said adhesion surface $S_{OBJ}$,
- selecting polymeric material having an elongation at break value of 20% or more suitable for a core layer CLR1 based on the tack value, such that the minimum detaching force $F_{ADH1}$ of the adhesive layer ADH1 is smaller than the minimum breaking force $F_{CLR1}$ needed to break the core layer CLR1,
- selecting material suitable for a face layer SLR1 based on the tack value, such that the minimum detaching force $F_{ADH1}$ of the adhesive layer ADH1 from an adhesion surface $S_{OBJ}$ is greater than the minimum breaking force $F_{SLR1}$ of the face layer SLR1 needed to break the face layer SLR1
- forming a facestock comprising the adhesive layer ADH1, the core layer CLR1 and the face layer SLR1
- forming the removable label LAB1 having length $L_{10}$, width $W_{10}$, and thickness $d_{10}$ from the facestock.

The facestock may be formed on a release liner.

A removable label LAB1 having length $L_{10}$, width $W_{10}$, and thickness $d_{10}$, the label LAB1 may comprise

- an adhesive layer ADH1 attachable to an adhesion surface $S_{OBJ}$
- a polymeric core layer CLR1 having an elongation at break value of 20% or more,
- a face layer SLR1 attached to the core layer CLR1.
  The composition of the adhesive layer ADH1, the material of the core layer CLR1, and the material of the face layer SLR1 may have been selected such that
- the minimum breaking force $F_{SLR1}$ of the face layer SLR1 needed to break the face layer SLR1 is less than the minimum breaking force $F_{CLR1}$ needed to break the core layer CLR1, and
- the face layer SLR1 is converted into a non-continuous face layer SLR1 comprising one or more surface portions defined by one or more visually detectable fracture lines, while the core layer CLR1 remains undivided in one piece, when the label LAB1 is stretched by a pulling force $F_N$ equal to or greater than the minimum breaking force $F_{SLR1}$ of the face layer SLR1 needed to break the face layer SLR1 in a direction substantially parallel with the surface of the label LAB1.

The removable label may comprise a minimum breaking force $F_{SLR1}$ of the face layer SLR1 needed to break the face layer SLR1, which minimum breaking force $F_{SLR1}$ is less than the minimum yield force $F_Y$ of the polymeric core layer CLR1 wherein the core layer CLR1 begins to deform plastically. The pulling force $F_N$ may be equal to or greater than 0.1N, such as equal to or greater than 1N or 2N or more. The direction substantially parallel with the surface of the label LAB1 may be the length direction SX or the width direction SY. When the core layer CLR1 of the removable label LAB1 is oriented, the pulling force $F_N$ needed to break the face layer SLR1 attached to the core layer CLR1 may be different in the length direction SX and the width direction SY. The removable label may comprise a face layer SLR1 having an elongation at break value equal to or less than 4%. The removable label may comprise a core layer CLR1 having a tensile strength equal to or greater than 10 N/mm$^2$.

The face layer SLR1 has dimensions $W_S$, $L_S$ equal to or less than the dimensions $W_{10}$, $L_{10}$ of the label LAB1. The face layer SLR1 material may provide contrast such that the face layer SLR1 differs visually from the core layer. The face layer SLR1 may be applied on the core layer CLR1 such that the face layer SLR1 is the outermost layer of the label LAB1. When the face layer SLR1 is attached between a first and a second core layer CLR1, the outermost core layer CLR1 may be of substantially transparent material such that the face layer SLR1 beneath the outermost core layer CLR1 is visible through the outermost core layer CLR1.

When the adhesive tack value has been selected based on the surface properties of the package material, a combination PROD1 of a removable label LAB1 and a package OBJ1 comprising the adhesion surface $S_{OBJ}$ may be arranged, wherein the label LAB1 has been attached to the adhesion surface $S_{OBJ}$, and wherein

- the minimum detaching force $F_{ADH1}$ of the adhesive layer ADH1 needed for pulling the label LAB1 off from the adhesion surface $S_{OBJ}$ is greater than the minimum breaking force $F_{SLR1}$ of the face layer SLR1 needed to break the face layer SLR1, and
- the minimum detaching force $F_{ADH1}$ of the adhesive layer ADH1 is smaller than the breaking force $F_{CLR1}$ needed to break the core layer CLR1,

such that the face layer SLR1 is converted into a non-continuous face layer SLR1 comprising one or more surface portions defined by one or more visually detectable fracture lines, while the core layer CLR1 remains undivided in one piece, when the label LAB1 is stretched by a pulling force $F_N$ equal to or greater than the minimum detaching force $F_{ADH1}$ of the adhesive layer ADH1 in a direction substantially parallel with the surface normal of the label LAB1 surface.

The combination PROD1 may be arranged such that an adhesion force $F_{AF}$ of the adhesive layer ADH1 towards the label LAB1 is greater than the minimum detaching force $F_{ADH1}$ of the adhesive layer ADH1 required for pulling the label off from the adhesion surface $S_{OBJ}$, such that the adhesive layer ADH1 is removable from the adhesion surface $S_{OBJ}$ without damage to said adhesion surface $S_{OBJ}$, when the label LAB1 is stretched by a pulling force $F_N$ equal to or greater than the minimum detaching force $F_{ADH1}$ of the adhesive layer ADH1 in a direction substantially parallel with the surface normal of the label LAB1 surface.

When the adhesive tack value has been selected based on the surface properties of the package material, the adhesive layer ADH1, the material of the core layer CLR1, and the material of the face layer SLR1 may further have been selected such that

- the minimum detaching force $F_{ADH1}$ of the adhesive layer ADH1 from the adhesion surface $S_{OBJ}$ is greater than the minimum breaking force $F_{SLR1}$ of the face layer SLR1 needed to break the face layer SLR1, and
- the minimum detaching force $F_{ADH1}$ of the adhesive layer ADH1 is less than the breaking force $F_{CLR1}$ needed to break the core layer CLR1.

When the adhesive tack value has been selected based on the surface properties of the package material, the minimum detaching force $F_{ADH1}$ of the adhesive layer ADH1 may further be smaller than the minimum yield force $F_Y$ of the polymeric core layer CLR1 wherein the core layer CLR1 begins to deform plastically.

When the adhesive tack value has been selected based on the surface properties of the package material, the minimum detaching force $F_{ADH1}$ of the adhesive layer ADH1 from the adhesion surface $S_{OBJ}$ is greater than the minimum breaking force $F_{SLR1}$ of the face layer SLR1 needed to break the face layer SLR1, such that upon detachment of the label from the adhesion surface $S_{OBJ}$ the core layer is deformable and the face layer is SLR1 is convertible into a non-continuous face layer SLR1 having a mosaic like structure indicating the detachment of the label.

When the adhesive tack value has been selected based on the surface properties of the package material, the adhesion force $F_{AF}$ of the adhesive layer ADH1 towards the label LAB1 is greater than the minimum detaching force $F_{ADH1}$ of the adhesive layer ADH1 required for pulling the label off from the adhesion surface $S_{OBJ}$.

Preferably, the removable label LAB1 formed from the facestock has width $W_{10}$ of at least 25 mm and a length $L_{10}$ of at least 175 mm, such that adhesion tests according to FINAT test methods FTM1, FTM2, and FTM 9 (FINAT handbook 9th edition, 2014) may be performed on the label LAB1 as such. However, these dimensions are not essential, as either a new label LAB1 corresponding to these dimensions may be obtained from the facestock, or the functionality of the label LAB1 may be tested by the adhesion test described above.

In addition to the width $W_{10}$ and a length $L_{10}$, the removable label LAB1 has a initial thickness $d_{10}$. The initial thickness $d_{10}$ of the label is the combined thickness of each layer present in a label. The initial thickness $d_{10}$ may be selected based on the properties of the layer materials of the label. The face layer may have a thickness of equal to or less than 50 micrometers, such as in the range of 30 to 50 micrometers. The face layer may have an elongation at break value of equal to or less than 10%, such as equal to or less than 4%, such as in the range of 0.1 to 4%. The core layer may have a thickness of equal to or less than 100 micrometers, such as in the range of 30 to 100 micrometers. The core layer may have an elongation at break value of equal to or higher than 20%, such as equal to or higher than 50%. The core layer may have a tensile strength equal to or higher than 8 N/mm$^2$, such as equal to or higher than 10 N/mm$^2$. The initial thickness $d_{10}$ may in the range of 50 micrometers ($\mu$m) to 3000 micrometers ($\mu$m), preferably at least 100 micrometers ($\mu$m), such as in the range of 100 micrometers ($\mu$m) to 1000 micrometers ($\mu$m), for example equal to or more than 150 micrometers ($\mu$m).

The label may optionally comprise one or more tie layers. A tie layer may, for example be used for joining the face layer to the core layer. A tie layer may have a tack value. The tack value of the tie layer may be equal to or higher than 4.

EXAMPLES

Example 1

A removable label suitable for use on a surface material consisting of polypropylene may have a label structure comprising

- a core layer having a first side and a second side,
- a first adhesive layer attached to the first side of the core layer, and
- a face layer attached to the second side of the core layer through a tie layer, wherein the tie layer is a second adhesive layer.

The first adhesive layer may consist of a rubber based permanent hotmelt adhesive. The first adhesive layer may have an adhesive coat weight of 20 g/m$^2$ and an adhesive tack value of 20N towards the surface material consisting of polypropylene.
The core layer may consist of ethylene-vinyl acetate (EVA) film. The core layer may have

- a thickness of 100 micrometers ($\mu$m),
- a grammage of 94 g/m$^2$,
- a tensile strength of 10 N/mm$^2$, and
- an elongation at break of 500%.

The face layer may consist of polyvinyl chloride (PVC) film. The face layer may have

- a thickness of 50 micrometers ($\mu$m),
- a grammage of 100 g/m$^2$,
- a tensile strength of 20 N/mm$^2$ in machine direction, and
- an elongation at break of 4%.

The tie layer may consist of a water based permanent acrylic adhesive. The tie layer may have an adhesive coat weight of 16g/m$^2$ and an adhesive tack value of 9N. The second adhesive layer may be used for laminating the face layer and the core layer together.

Example 2

A removable label suitable for use on a metal surface may have a label structure comprising

- a core layer having a first side and a second side,
- a first adhesive layer attached to the first side of the core layer, and
- a face layer attached to the second side of the core layer through a tie layer, wherein the tie layer is a second adhesive layer.

The first adhesive layer may consist of a permanent UV acrylic adhesive. The first adhesive layer may have an adhesive coat weight of 30 g/m$^2$ and an adhesive tack value of 22N towards the metal surface.
The core layer may consist of polyethylene (PE) film. The core layer may have

- a thickness of 45 micrometers ($\mu$m),
- a grammage of 45 g/m$^2$,
- a tensile strength of 18 N/mm$^2$, and
- an elongation at break of 400%.

The face layer may consist of paper. The paper may be based on cellulose fibers. The face layer may have

- a thickness of 38 micrometers ($\mu$m),
- a grammage of 30 g/m$^2$,
- a tensile strength of 2.7 kN/m in machine direction, and
- a tensile strength of 2.7 kN/m in transverse direction perpendicular to machine direction.

The second adhesive layer may consist of a permanent UV acrylic adhesive. The second adhesive layer may have an adhesive coat weight of 14 g/m$^2$ and an adhesive tack value of 4N. The second adhesive layer may be used for laminating the face layer and the core layer together.

Example 3

A removable label suitable for use on a glass surface may have a label structure comprising

- a face layer having a first side and a second side,
- a first core layer attached to the first side of the face layer via a first tie layer,
- a second core layer attached to the second side of the face layer via a second tie layer, and
- an adhesive layer attached to the outermost surface of the first or the second core layer, the adhesive layer suitable for attaching the removable label on a glass surface.

The first and the second core layer may consist of ethylene-vinyl acetate (EVA) film. Each core layer may independently have

- a thickness of 50 micrometers ($\mu$m),
- a grammage of 47 g/m$^2$,
- a tensile strength of 10 N/mm$^2$, and
- an elongation at break of 500%.

The face layer may consist of polyvinyl chloride (PVC) film. The face layer may have

- a thickness of 40 micrometers ($\mu$m),
- a grammage of 80 g/m$^2$,
- a tensile strength of 20 N/mm$^2$ in machine direction, and
- an elongation at break of 4%.

The first and second tie layers may consist of a permanent polyurethane adhesive. Each tie layer may independently have an adhesive coat weight of 2 g/m$^2$. The polyurethane adhesive creates a permanent bond, which may be used to laminate the face layer between the two core layers.

According to an embodiment, the removable label may be used as a sealing label for security purposes. The removable label may be used, for example, in a package suitable for delivering a purchased product by postal service or a delivery service, such that the product or part of the product may be returned in the same package. The removable label, when attached, may comprise a continuous face layer surface, which may indicate that the contents of the package have not been tampered with. When the package is opened by removing the label, the face layer surface is converted into a non-continuous face layer surface having a visually detectable mosaic-like appearance, which may indicate that the contents of the package have been tampered with. Thus a person receiving the package may inspects the sealing label and check whether or not the package has been tampered with. When the person receiving the package opens the package by removing the label, the core layer of the label is elongated and the face layer is converted into a non-continuous face layer surface. Any markings on the label face layer surface may remain still readable. However, the label cannot be reused without visually detectable and permanent damage on the label.

According to an embodiment, the removable label may be used as a label for carrying information. The removable label may be used, for example, in a package suitable for delivering a purchased product by postal service or a delivery service. The label may be removed from the adhesion surface $S_{OBJ}$ of the package such that the adhesion surface of the package remains clean. In other words, the label comprising an adhesive layer, a core layer and a face layer may be removed in a single piece, without any visual residues remaining on the adhesion surface of the package OBJ1. This method of removal improves the reusability of the package OBJ1, as it reduces laborious cleaning operations.

According to an embodiment, the removable label may be used both as a sealing label and as a label for carrying information, as described in the embodiments above.

According to an embodiment, the label may comprise an adhesive layer attached to a first side of a core layer and a face layer attached to a second side of the core layer CLR1 by a tie layer. The adhesive layer ADH1 may consist essentially of rubber based hotmelt adhesive. The core layer may consist essentially of ethylene-vinyl acetate (EVA). The face layer may consist essentially of polymeric polyvinyl chloride (PVC) film. The tie layer joining the face layer to the core layer may consist essentially of an acrylic, water based adhesive.

Fig. 6 shows, by way of example, the tensile strain of the adhesive layer ADH1 of a label LAB1 as the function of the stress $\sigma$ caused by a pulling force $F_N$ to the label LAB1.

The curve $C_{ADH1}$ represents the amount of deformation (strain) of the adhesive layer ADH1 of a label LAB1 at distinct intervals of tensile loading (pulling force $F_N$). The tensile strain $\varepsilon$ represents the peel adhesion of adhesive layer ADH1 as the function of the stress $\sigma$ in a situation where the pulling force $F_N$ continuously increases from a zero value to a minimum adhesion force $F_{AF}$. The adhesion force $F_{AF}$ relates to the adhesive force of the adhesive layer ADH1 towards the polymeric core layer CLR1.

$\varepsilon_{BCK1}$ denotes the strain required to detach the adhesive layer ADH1 from the surface $S_{BCK1}$ of a release liner BCK1. In other words a minimum release force $F_{BCK1}$ may produce a stress $\varepsilon_{BCK1}$ needed to detach the adhesive layer ADH1 from the surface $S_{BCK1}$ of the release liner BCK1.

$\varepsilon_{AF}$ denotes the strain required to detach the adhesive layer ADH1 from the core layer CLR1 of the label LAB1. In other words a minimum adhesion force $F_{AF}$ of the adhesive layer ADH1 towards the polymeric core layer CLR1 may produce a stress $\varepsilon_{ADH1}$ needed to detach the adhesive layer ADH1 from the polymeric core layer CLR1. The minimum adhesion force $F_{AF}$ of the adhesive layer ADH1 towards the polymeric core layer CLR1 may be greater than the minimum detaching force $F_{ADH1}$ of the adhesive layer ADH1 towards the adhesion surface ($S_{OBJ}$) of the package OBJ1.

In the label LAB1 structure, $\varepsilon_{SLR1} < \varepsilon_{ADH1} < \varepsilon_{CLR1} < \varepsilon_{AF}$, such that $F_{SLR1} < F_{ADH1} < F_{CLR1} < F_{AF}$.

In the label LAB1 structure, $\varepsilon_{SLR1} < \varepsilon_{ADH1} < \varepsilon_Y < \varepsilon_{CLR1} < \varepsilon_{AF}$, such that $F_{SLR1} < F_{ADH1} < F_Y < F_{CLR1} < F_{AF}$. In the label LAB1 structure, $\varepsilon_{SLR1} < \varepsilon_Y < \varepsilon_{ADH1} < \varepsilon_{CLR1} < \varepsilon_{AF}$, such that $F_{SLR1} < F_Y < F_{ADH1} < F_{CLR1} < F_{AF}$.

A removable label LAB1 package OBJ1 may thus comprise a combination of adhesive layer ADH1 and core layer CLR1 wherein the dimensions $W_{10}$, $L_{10}$, $d_{10}$ of the label LAB1, the composition of the adhesive layer ADH1, the material of the core layer CLR1, and the material of the face layer SLR1 may have been selected such that the adhesion force $F_{AF}$ of the adhesive layer ADH1 towards the polymeric core layer CLR1 is greater than the detaching force $F_{ADH1}$ of the adhesive layer ADH1 towards the adhesion package OBJ1 surface $S_{OBJ}$.

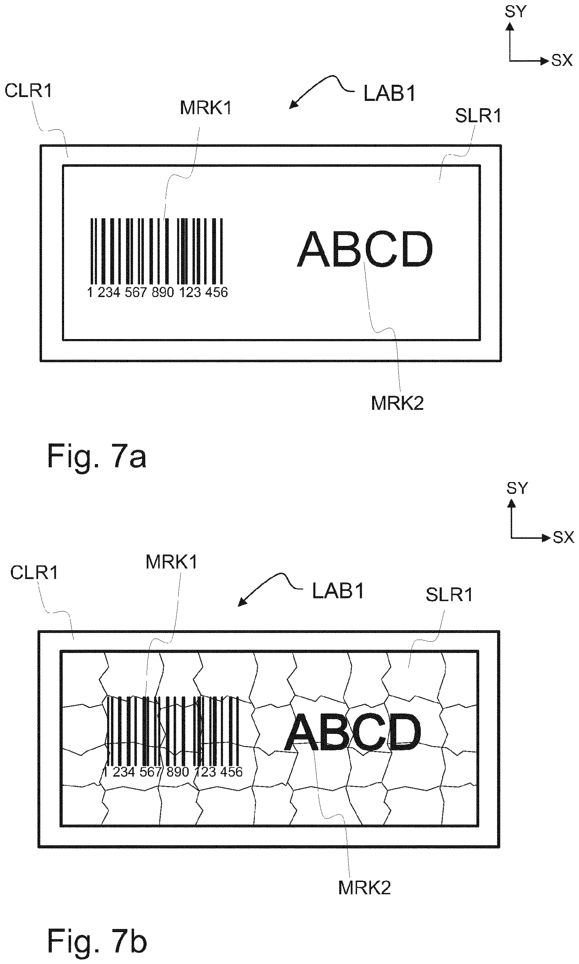

Referring to Figs 7a and 7b, the irreversible deformation of the face layer SLR1 of the label LAB1 may be easily visually detectable after the pulling force $F_N$ has been greater than a limit value $F_{SLR1}$. Fig. 7a shows, by way of example, in a top view, an undamaged removable label. Fig. 7b shows, by way of example, in a top view, an irreversibly damaged label LAB1 after the pulling force $F_N$ has been greater than a limit value $F_{SLR1}$. Pulling the label LAB1 away from the adhesion surface ($S_{OBJ}$) of the package OBJ1 may convert a continuous face layer SLR1 into a non-continuous and irreversibly damaged face layer SLR1. The damaged face layer SLR1 may comprise fracture lines, which may be for example cracks or crevices. While the damage to the face layer SLR1 is easily visually detectable, markings MRK1, MRK2 provided on the face layer SLR1 for information carrying purposes may still be detectable. When the combination of a core layer CLR1 and a face layer SLR1 is torn from the adhesion surface ($S_{OBJ}$) of a package in a single piece, the markings MRK1, MRK2 provided on the face layer SLR1 may be arranged to be visually detected. The markings MRK1, MRK2 applied on face layer SLR1 surface may be detectable by a non-contacting optical sensor. Examples of suitable non-contacting optical sensors are for example a camera system or a bar code reader capable of detecting the markings MRK1, MRK2 applied on face layer SLR1 surface.

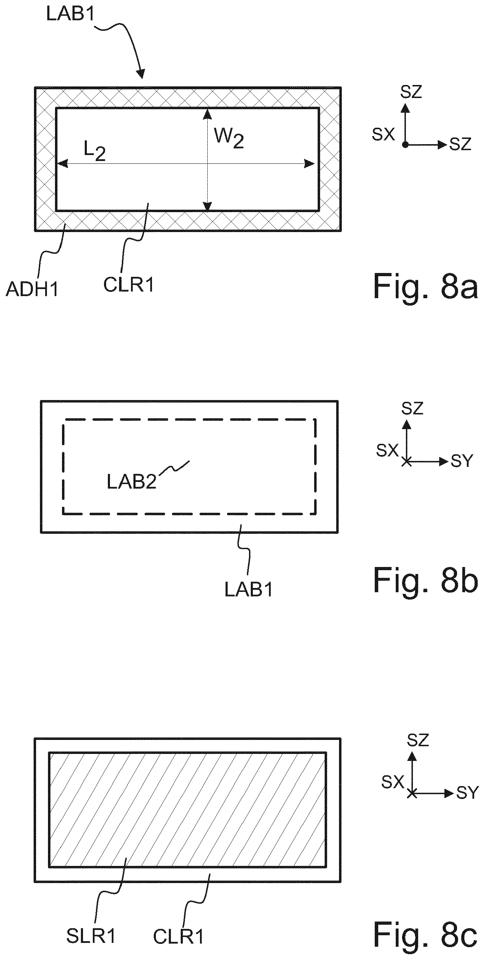

Referring to Figs 8a, 8b and 8c, according to an embodiment, the adhesive layer ADH1 may be attached to the core layer CLR1 such that the adhesive layer ADH1 is applied only on the peripheral boundaries of the core layer CLR1. A first label LAB1 may have a first surface area defined by an initial length $L_{10}$ and an initial width $W_{10}$. The first label LAB1 may comprise an adhesive layer free region defined by a width $W_2$ and length $L_2$. A second label LAB2 may have a second surface area defined by a maximum length $L_2$ or less and a maximum width $W_2$ or less. The second area may be equal to or less than the adhesive layer free region defined by a width $W_2$ and length $L_2$. Thus more than one labels LAB1, LAB2 may be attached on a package OBJ1 such that when the first label LAB1 is removed by irreversibly damaging the face layer SLR1 of the first label LAB1, a second label LAB2 may be revealed having an undamaged face layer SLR2.

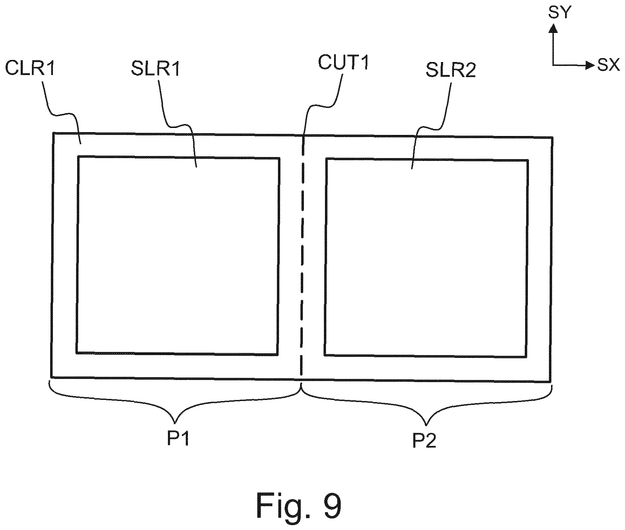

Referring to Fig 9, according to an embodiment, a removable label LAB1 may comprise multiple label parts P1, P2 separated by one or more perforation lines CUT1. For example, a first part P1 of the removable label LAB1 may comprise a first face layer portion SLR1 and a second part P2 of the removable label LAB1 may comprise a second face layer portion SLR2. The perforation line CUT1 may be arranged such that the first and second part P1, P2 of the removable label LAB1 may be ripped apart without damaging the surface layers SLR1, SLR2.

The materials and the thickness of the label LAB1 may be selected such that the label LAB1 may be easily bent. Consequently, the label may easily conform to the adhesion surface $S_{OBJ}$ of the package OBJ1.

For the person skilled in the art, it will be clear that modifications and variations of the products and the methods according to the present invention are perceivable. The figures are schematic. The particular embodiments described above with reference to the accompanying drawings are illustrative only and not meant to limit the scope of the invention, which is defined by the appended claims.

**Claims**

1.  A removable label (LAB1) having length ($L_{10}$), width ($W_{10}$), and thickness ($d_{10}$), the label (LAB1) comprising

    - an adhesive layer (ADH1) attachable to an adhesion surface ($S_{OBJ}$), the adhesive layer (ADH1) having a tack value such that the adhesive layer (ADH1) has a minimum detaching force ($F_{ADH1}$) from the adhesion surface ($S_{OBJ}$),
    - a polymeric core layer (CLR1) having an elongation at break value of 20% or more,
    - a face layer (SLR1) attached to the core layer (CLR1),
    **characterized in that** the composition of the adhesive layer (ADH1), the material of the core layer (CLR1), and the material of the face layer (SLR1) have been selected to maintain the label in one piece upon removal with the minimum detaching force ($F_{AHD1}$) such that
    - the minimum breaking force ($F_{SLR1}$) of the face layer (SLR1) needed to break the face layer (SLR1) is less than the minimum breaking force ($F_{CLR1}$) needed to break the core layer (CLR1),
    - the minimum detaching force ($F_{ADH1}$) of the adhesive layer (ADH1) from the adhesion surface ($S_{OBJ}$) is greater than the minimum breaking force ($F_{SLR1}$) of the face layer (SLR1) needed to break the face layer (SLR1),
    - the minimum detaching force ($F_{ADH1}$) of the adhesive layer (ADH1) is smaller than the breaking force ($F_{CLR1}$) needed to break the core layer (CLR1), and
    - the face layer (SLR1) is converted into a non-continuous face layer (SLR1) comprising one or more surface portions defined by one or more visually detectable fracture lines while the core layer (CLR1) remains undivided in one piece, when the label (LAB1) is stretched by a pulling force ($F_N$) equal to or greater than the minimum breaking force ($F_{SLR1}$) of the face layer (SLR1) needed to break the face layer (SLR1) in a direction substantially parallel with the surface of the label (LAB1).

2.  The removable label of claim 1, wherein the minimum breaking force ($F_{SLR1}$) of the face layer (SLR1) needed to break the face layer (SLR1) is less than the minimum yield force ($F_Y$) of the polymeric core layer (CLR1) wherein the core layer (CLR1) begins to deform plastically.

3.  The removable label of claim 1 or 2, wherein the pulling force ($F_N$) is equal to or greater than 0.1N, such as equal to or greater than 1N or more.

4.  The removable label according to any of the claims 1 to 3, wherein the direction substantially parallel with the surface of the label (LAB1) is the label length direction (SX) or the label width direction (SY).

5.  The removable label according to any of the claims 1 to 4, the face layer (SLR1) having an elongation at break value equal to or less than 4%.

6.  The removable label according to any of the claims 1 to 5, the core layer (CLR1) having an ultimate tensile strength equal to or greater than 10 N/mm$^2$.

7.  The label (LAB1) according to any of the claims 1 to 6, wherein a first side of the polymeric core layer (CLR1) is attached to the adhesive layer (ADH1) and a second side of the polymeric core layer (CLR1) is attached to the face layer (SLR1).

8.  The label (LAB1) according to any of the claims 1 to 7, wherein the face layer (SLR1) is the outermost layer of the label (LAB1) consisting of non-transparent or semi-transparent material suitable for printing, such as polymeric film or paper adjoined from one side to the core layer (CLR1) by a tie layer (ADH2).

9.  The label (LAB1) according to any of the claims 1 to 6, wherein the face layer (SLR1) is attached between a first and a second core layer (CLR1), the second core layer is the outermost layer of the label (LAB1) and substantially transparent such that the face layer (SLR1) beneath the outermost layer is visible through the outermost core layer (CLR1).

10. The label (LAB1) according to any of the claims 1 to 9, wherein the core layer is of elastic polymeric film, such as polyethylene, ethylene-vinyl acetate or polypropylene.

11. The label (LAB1) according to any of the claims 1 to 10, wherein the adhesive layer (ADH1) consists of a permanent type adhesive, such as a rubber based permanent hotmelt adhesive, permanent UV acrylic adhesive or permanent water based acrylic adhesive.

12. The label (LAB1) according to any of the claims 1 to 11 wherein a pulling force ($F_N$) equal to or greater than the minimum breaking force ($F_{SLR1}$) applied on the label (LAB1) produces a damaged face layer (SLR1) having a mosaic like appearance.

13. A combination (PROD1) of a removable label (LAB1) according to any of the claims 1 to 12, and a package (OBJ1) comprising the adhesion surface ($S_{OBJ}$), wherein the label (LAB1) has been attached to the adhesion surface ($S_{OBJ}$).

14. A combination (PROD1) of claim 13, wherein an adhesion force ($F_{AF}$) of the adhesive layer (ADH1) towards the label (LAB1) is greater than the minimum detaching force ($F_{ADH1}$) of the adhesive layer (ADH1) required for pulling the label off from the adhesion surface ($S_{OBJ}$), such that the adhesive layer (ADH1) is removable from the adhesion surface ($S_{OBJ}$) without damage to said adhesion surface ($S_{OBJ}$), when the label (LAB1) is stretched by a pulling force ($F_N$) equal to or greater than the minimum detaching force ($F_{ADH1}$) of the adhesive layer (ADH1) in a direction substantially parallel with the surface normal of the label (LAB1) surface.

15. A method for manufacturing a removable label (LAB1) for an adhesion surface ($S_{OBJ}$), the method comprising:

- selecting an adhesive layer (ADH1) having a tack value suitable for the adhesion surface ($S_{OBJ}$) by means of an adhesion test, to obtain an adhesive layer (ADH1) having a minimum detaching force ($F_{ADH1}$) from the adhesion surface ($S_{OBJ}$) such that the adhesive layer (ADH1) is removable from the adhesion surface ($S_{OBJ}$) without damage to said adhesion surface ($S_{OBJ}$),
- selecting polymeric material having an elongation at break value of 20% or more suitable for a core layer (CLR1) based on the tack value, such that the minimum detaching force ($F_{ADH1}$) of the adhesive layer (ADH1) is smaller than the minimum breaking force ($F_{CLR1}$) needed to break the core layer (CLR1),
- selecting material suitable for a face layer (SLR1) based on the tack value, such that the minimum detaching force ($F_{ADH1}$) of the adhesive layer (ADH1) from the adhesion surface ($S_{OBJ}$) is greater than the minimum breaking force ($F_{SLR1}$) of the face layer (SLR1) needed to break the face layer (SLR1), and such that the minimum breaking force ($F_{SLR1}$) of the face layer (SLR1) needed to break the face layer (SLR1) is less than the minimum breaking force ($F_{CLR1}$) needed to break the core layer (CLR1),
- forming a facestock comprising the adhesive layer (ADH1), the core layer (CLR1) and the face layer (SLR1), and
- forming the removable label (LAB1) having length ($L_{10}$), width ($W_{10}$), and thickness ($d_{10}$) from the facestock.

16. Use of a removable label (LAB1) according to any of the claims 1 to 12 on a surface of a package (OBJ1).

17. Use of a removable label (LAB1) according to claim 16, wherein the package (OBJ1) is a reusable package.

18. Use of a removable label (LAB1) according to claims 16 or 17 to indicate visually the detachment of the label (LAB1) from the package (OBJ1).

**Patentansprüche**

1. Entfernbares Etikett (LAB1) mit einer Länge ($L_{10}$), einer Breite ($W_{10}$) und einer Dicke ($d_{10}$), wobei das Etikett (LAB1) Folgendes umfasst:

- eine Klebeschicht (ADH1), die an einer Klebefläche ($S_{OBJ}$) angebracht werden kann, wobei die Klebeschicht (ADH1) einen solchen Haftfestigkeitswert hat, dass die Klebeschicht (ADH1) eine Mindestablösekraft ($F_{ADH1}$) von der Klebefläche ($S_{OBJ}$) erfordert,
- eine polymere Kernschicht (CLR1) mit einem Reißdehnungswert von 20 % oder mehr,
- eine Oberschicht (SLR1), die an der Kernschicht (CLR1) angebracht ist, **dadurch gekennzeichnet, dass** die Zusammensetzung der Klebeschicht (ADH1), das Material der Kernschicht (CLR1) und das Material der Oberschicht (SLR1) so ausgewählt wurden, dass das Etikett beim Entfernen mit der Mindestablösekraft ($F_{AHD1}$) in einem Stück bleibt, dergestalt, dass
- die Mindestreißkraft ($F_{SLR1}$) der Oberschicht (SLR1), die zum Reißen der Oberschicht (SLR1) erforderlich ist, geringer ist als die Mindestreißkraft ($F_{CLR1}$), die zum Reißen der Kernschicht (CLR1) erforderlich ist,
- die Mindestablösekraft ($F_{ADH1}$) der Klebeschicht (ADH1) von der Klebefläche ($S_{OBJ}$) größer ist als die Mindestreißkraft ($F_{SLR1}$) der Oberschicht (SLR1), die zum Reißen der Oberschicht (SLR1) erforderlich ist,

- die Mindestablösekraft ($F_{ADH1}$) der Klebeschicht (ADH1) kleiner ist als die Reißkraft ($F_{CLR1}$), die zum Reißen der Kernschicht (CLR1) erforderlich ist, und

- die Oberschicht (SLR1) in eine nicht-durchgängige Oberschicht (SLR1) verwandelt wird, die einen oder mehrere Oberflächenabschnitte umfasst, die durch eine oder mehrere visuell erkennbare Bruchlinien definiert werden, während die Kernschicht (CLR1) ungeteilt und in einem Stück bleibt, wenn das Etikett (LAB1) um eine Zugkraft ($F_N$) gereckt wird, die mindestens so groß ist wie die Mindestreißkraft ($F_{SLR1}$) der Oberschicht (SLR1), die zum Reißen der Oberschicht (SLR1) in einer Richtung im Wesentlichen parallel zur Oberfläche des Etiketts (LAB1) erforderlich ist.

2. Entfernbares Etikett nach Anspruch 1, wobei die Mindestreißkraft ($F_{SLR1}$) der Oberschicht (SLR1), die zum Reißen der Oberschicht (SLR1) erforderlich ist, geringer ist als die Mindeststreckkraft ($F_Y$) der polymeren Kernschicht (CLR1), bei die Kernschicht (CLR1) beginnt, sich plastisch zu verformen.

3. Entfernbares Etikett nach Anspruch 1 oder 2, wobei die Zugkraft ($F_N$) mindestens 0,1 N beträgt, wie zum Beispiel mindestens 1 N.

4. Entfernbares Etikett nach einem der Ansprüche 1 bis 3, wobei die Richtung im Wesentlichen parallel zur Oberfläche des Etiketts (LAB1) die Etikett-Längsrichtung (SX) oder die Etikett-Breitenrichtung (SY) ist.

5. Entfernbares Etikett nach einem der Ansprüche 1 bis 4, wobei die Oberschicht (SLR1) einen Reißdehnungswert von maximal 4 % aufweist.

6. Entfernbares Etikett nach einem der Ansprüche 1 bis 5, wobei die Kernschicht (CLR1) eine Zugfestigkeit von mindestens 10 N/mm$^2$ besitzt.

7. Etikett (LAB1) nach einem der Ansprüche 1 bis 6, wobei eine erste Seite der polymeren Kernschicht (CLR1) an der Klebeschicht (ADH1) angebracht ist und eine zweite Seite der polymeren Kernschicht (CLR1) an der Oberschicht (SLR1) angebracht ist.

8. Etikett (LAB1) nach einem der Ansprüche 1 bis 7, wobei die Oberschicht (SLR1) die äußerste Schicht des Etiketts (LAB1) ist, die aus nichttransparentem oder halb-transparentem Material besteht, das zum Bedrucken geeignet ist, wie zum Beispiel ein Polymerfilm oder Papier, das von einer Seite her an der Kernschicht (CLR1) durch eine Bindeschicht (ADH2) angebracht ist.

9. Etikett (LAB1) nach einem der Ansprüche 1 bis 6, wobei die Oberschicht (SLR1) zwischen einer ersten und einer zweiten Kernschicht (CLR1) angebracht ist, wobei die zweite Kernschicht die äußerste Schicht des Etiketts (LAB1) ist und im Wesentlichen transparent ist, dergestalt, dass die Oberschicht (SLR1) unter der äußersten Schicht durch die äußerste Kernschicht (CLR1) hindurch sichtbar ist.

10. Etikett (LAB1) nach einem der Ansprüche 1 bis 9, wobei die Kernschicht aus einem elastischen Polymerfilm besteht, wie zum Beispiel Polyethylen, Ethylenvinylacetat oder Polypropylen.

11. Etikett (LAB1) nach einem der Ansprüche 1 bis 10, wobei die Klebeschicht (ADH1) aus einem Dauerklebstoff besteht, wie zum Beispiel einem kautschukbasierten Dauer-Warmschmelzklebstoff, einem UV Dauer-Acrylklebstoff oder einem Dauer-Acrylklebstoff auf Wasserbasis.

12. Etikett (LAB1) nach einem der Ansprüche 1 bis 11, wobei eine Zugkraft ($F_N$) von mindestens der Mindestreißkraft ($F_{SLR1}$), die auf das Etikett (LAB1) wirkt, eine beschädigte Oberschicht (SLR1) mit einem mosaikartigen Aussehen erzeugt.

13. Kombination (PROD1) aus einem entfernbaren Etikett (LAB1) nach einem der Ansprüche 1 bis 12 und einer Packung (OBJ1), die die Klebefläche ($S_{OBJ}$) umfasst, wobei das Etikett (LAB1) an der Klebefläche ($S_{OBJ}$) angebracht wurde.

14. Kombination (PROD1) nach Anspruch 13, wobei eine Klebekraft (FAF) der Klebeschicht (ADH1) in Richtung des Etiketts (LAB1) größer ist als die Mindestablösekraft ($F_{ADH1}$) der Klebeschicht (ADH1), die zum Abziehen des Etiketts von der Klebefläche ($S_{OBJ}$) benötigt wird, dergestalt, dass die Klebeschicht (ADH1) von der Klebefläche ($S_{OBJ}$) ohne Beschädigung der Klebefläche ($S_{OBJ}$) entfernt werden kann, wenn das Etikett (LAB1) durch eine Zugkraft ($F_N$)

von mindestens der Mindestablösekraft ($F_{ADH1}$) der Klebeschicht (ADH1) in einer Richtung im Wesentlichen parallel zur rechtwinkeligen Oberfläche des Etiketts (LAB1) gereckt wird.

15. Verfahren zum Herstellen eines entfernbaren Etiketts (LAB1) für eine Klebefläche ($S_{OBJ}$), wobei das Verfahren Folgendes umfasst:

- Auswählen einer Klebeschicht (ADH1) mit einem Haftfestigkeitswert, der für die Klebefläche ($S_{OBJ}$) geeignet ist, mittels eines Adhäsionstests, um eine Klebeschicht (ADH1) zu erhalten, die eine Mindestablösekraft ($F_{ADH1}$) von der Klebefläche ($S_{OBJ}$) aufweist, dergestalt, dass die Klebeschicht (ADH1) von der Klebefläche ($S_{OBJ}$) ohne Beschädigung der Klebefläche ($S_{OBJ}$) entfernt werden kann,
- Auswählen eines Polymermaterials mit einem Reißdehnungswert von 20 % oder mehr, das für eine Kernschicht (CLR1) geeignet ist, auf der Basis des Haftfestigkeitswertes, dergestalt, dass die Mindestablösekraft ($F_{ADH1}$) der Klebeschicht (ADH1) kleiner ist als die Mindestreißkraft ($F_{CLR1}$), die zum Reißen der Kernschicht (CLR1) erforderlich ist,
- Auswählen eines Materials, das für eine Oberschicht (SLR1) geeignet ist, auf der Basis des Haftfestigkeitswertes, dergestalt, dass die Mindestablösekraft ($F_{ADH1}$) der Klebeschicht (ADH1) von der Klebefläche (SOBJ) größer ist als die Mindestreißkraft ($F_{SLR1}$) der Oberschicht (SLR1), die zum Reißen der Oberschicht (SLR1) erforderlich ist, und dergestalt, dass die Mindestreißkraft ($F_{SLR1}$) der Oberschicht (SLR1), die zum Reißen der Oberschicht (SLR1) erforderlich ist, geringer ist als die Mindestreißkraft ($F_{CLR1}$), die zum Reißen der Kernschicht (CLR1) erforderlich ist,
- Bilden eines Obermaterials, die die Klebeschicht (ADH1), die Kernschicht (CLR1) und die Oberschicht (SLR1) umfasst, und
- Bilden des entfernbaren Etiketts (LAB1) mit einer Länge ($L_{10}$), einer Breite ($W_{10}$) und einer Dicke ($d_{10}$) aus dem Obermaterial.

16. Verwendung eines entfernbaren Etiketts (LAB1) nach einem der Ansprüche 1 bis 12 auf einer Oberfläche einer Packung (OBJ1).

17. Verwendung eines entfernbaren Etiketts (LAB1) nach Anspruch 16, wobei die Packung (OBJ1) eine wiederverwendbare Packung ist.

18. Verwendung eines entfernbaren Etiketts (LAB1) nach den Ansprüchen 16 oder 17 zum visuellen Anzeigen des Ablösens des Etiketts (LAB1) von der Packung (OBJ1).

**Revendications**

1. Étiquette amovible (LAB1) ayant une longueur ($L_{10}$), une largeur ($W_{10}$) et une épaisseur ($d_{10}$), l'étiquette (LAB1) comprenant

- une couche adhésive (ADH1) pouvant être fixée à une surface d'adhésion ($S_{OBJ}$), la couche adhésive (ADH1) ayant un indice d'adhésivité tel que la couche adhésive (ADH1) a une force de détachement minimum ($F_{ADH1}$) de la surface d'adhésion ($S_{OBJ}$),
- une couche centrale polymère (CLR1) ayant un facteur d'allongement à la rupture de 20% ou plus et
- une couche faciale (SLR1) fixée à la couche centrale (CLR1), **caractérisée en ce que** la composition de la couche adhésive (ADH1), le matériau de la couche centrale (CLR1) et le matériau de la couche faciale (SLR1) ont été sélectionnés pour conserver l'étiquette en un seul morceau lorsqu'elle est retirée en appliquant la force de détachement minimum ($F_{ADH1}$) de sorte que
- la force de rupture minimum ($F_{SLR1}$) de la couche faciale (SLR1) nécessaire pour briser la couche faciale (SLR1) est inférieure à la force de rupture minimum ($F_{CLR1}$) nécessaire pour briser la couche centrale (CLR1),
- la force de détachement minimum ($F_{ADH1}$) nécessaire pour détacher la couche adhésive (ADH1) de la surface d'adhésion ($S_{OBJ}$) est supérieure à la force de rupture minimum ($F_{SLR1}$) de la couche faciale (SLR1) nécessaire pour briser la couche faciale (SLR1),
- la force de détachement minimum ($F_{ADH1}$) de la couche adhésive (ADH1) est inférieure à la force de rupture minimum ($F_{CLR1}$) nécessaire pour briser la couche centrale (CLR1), et
- la couche faciale (SLR1) est transformée en une couche faciale discontinue (SLR1) comprenant une ou plusieurs parties superficielles définies par une ou plusieurs lignes de fracture décelables visuellement tandis que la couche centrale (CLR1) reste en un seul morceau quand l'étiquette (LAB1) est étirée par une force de traction ($F_N$) égale ou supérieure à la force de rupture minimum ($F_{SLR1}$) de la couche faciale (SLR1) nécessaire pour briser la couche faciale (SLR1) dans une direction sensiblement parallèle à la surface de l'étiquette (LAB1).

2. Étiquette amovible selon la revendication 1, dans laquelle la force de rupture minimum ($F_{SLR1}$) de la couche faciale (SLR1) nécessaire pour briser la couche faciale (SLR1) est inférieure à la force élastique minimum ($F_Y$) de la couche centrale polymère (CLR1) quand la couche centrale (CLR1) commence à se déformer plastiquement.

3. Étiquette amovible selon la revendication 1 ou 2, dans laquelle la force de traction ($F_N$) est égale ou supérieure à 0,1 N, par exemple égale ou supérieure à 1 N.

4. Étiquette amovible selon l'une quelconque des revendications 1 à 3, dans laquelle la direction sensiblement parallèle à la surface de l'étiquette (LAB1) est la direction longitudinale de l'étiquette (SX) ou la direction transversale de l'étiquette (SY).

5. Étiquette amovible selon l'une quelconque des revendications 1 à 4, la couche faciale (SLR1) ayant un facteur d'allongement à la rupture égal ou inférieur à 4%.

6. Étiquette amovible selon l'une quelconque des revendications 1 à 5, la couche centrale (CLR1) ayant une résistance maximum à la traction égale ou supérieure à 10 N/mm$^2$.

7. Étiquette (LAB1) selon l'une quelconque des revendications 1 à 6, dans laquelle une première face de la couche centrale polymère (CLR1) est fixée à la couche adhésive (ADH1) et une seconde face de la couche centrale polymère (CLR1) est fixée à la couche faciale (SLR1).

8. Étiquette (LAB1) selon l'une quelconque des revendications 1 à 7, dans laquelle la couche faciale (SLR1) est la couche la plus extérieure de l'étiquette (LAB1), constituée d'un matériau non transparent ou semi-transparent convenant pour l'impression, tel qu'un film polymère ou du papier, accolée sur une face à la couche centrale (CLR1) par une couche de liaison (ADH2).

9. Étiquette (LAB1) selon l'une quelconque des revendications 1 à 6, dans laquelle la couche faciale (SLR1) est fixée entre une première et une seconde couche centrale (CLR1), la seconde couche centrale étant la couche la plus extérieure de l'étiquette (LAB1), sensiblement transparente de sorte que la couche faciale (SLR1) sous la couche la plus extérieure est visible à travers la couche centrale la plus extérieure (CLR1).

10. Étiquette (LAB1) selon l'une quelconque des revendications 1 à 9, dans laquelle la couche centrale est constituée par un film polymère élastique tel que du polyéthylène, de l'éthylène-acétate de vinyle ou du polypropylène.

11. Étiquette (LAB1) selon l'une quelconque des revendications 1 à 10, dans laquelle la couche adhésive (ADH1) est constituée d'un adhésif de type permanent, tel qu'un adhésif fusible à chaud permanent à base de caoutchouc, un adhésif acrylique permanent résistant aux UV ou un adhésif acrylique permanent à base d'eau.

12. Étiquette (LAB1) selon l'une quelconque des revendications 1 à 11, dans laquelle une force de traction ($F_N$) égale ou supérieure à la force de rupture minimum ($F_{SLR1}$) appliquée sur l'étiquette (LAB1) endommage la couche faciale (SLR1) et lui donne un aspect de mosaïque.

13. Combinaison (PROD1) d'une étiquette amovible (LAB1) selon l'une quelconque des revendications 1 à 12 et d'un emballage (OBJ1) comprenant la surface d'adhésion ($S_{OBJ}$), dans laquelle l'étiquette (LAB1) a été fixée sur la surface d'adhésion ($S_{OBJ}$).

14. Combinaison (PROD1) selon la revendication 13, dans laquelle une force d'adhésion ($F_{AF}$) de la couche d'adhésion (ADH1) vers l'étiquette (LAB1) est supérieure à la force de détachement minimum ($F_{ADH1}$) de la couche adhésive (ADH1) nécessaire pour détacher l'étiquette de la surface d'adhésion ($S_{OBJ}$), de sorte que la couche adhésive (ADH1) peut être détachée de la surface d'adhésion ($S_{OBJ}$) sans endommager ladite surface d'adhésion ($S_{OBJ}$), quand l'étiquette (LAB1) est étirée par une force de traction ($F_N$) égale ou supérieure à la force de détachement minimum ($F_{ADH1}$) de la couche adhésive (ADH1) dans une direction sensiblement parallèle à la normale de la surface de l'étiquette (LAB1).

15. Procédé de fabrication d'une étiquette amovible (LAB1) destinée à une surface d'adhésion ($S_{OBJ}$), ce procédé comprenant

- la sélection d'une couche adhésive (ADH1) ayant un indice d'adhésivité convenant pour la surface d'adhésion ($S_{OBJ}$) au moyen d'un test d'adhésion, pour obtenir une couche adhésive (ADH1) ayant une force de détachement minimum ($F_{ADH1}$) de la surface d'adhésion ($S_{OBJ}$) telle que la couche adhésive (ADH1) peut être détachée de la surface d'adhésion ($S_{OBJ}$) sans endommager ladite surface d'adhésion ($S_{OBJ}$),

- la sélection d'un matériau polymère ayant un facteur d'allongement à la rupture de 20% ou plus convenant pour une couche centrale (CLR1) sur la base de l'indice d'adhésivité, de sorte que la force de détachement minimum ($F_{ADH1}$) de la couche adhésive (ADH1) est inférieure à la force de rupture minimum ($F_{CLR1}$) nécessaire pour briser la couche centrale (CLR1),

- la sélection d'un matériau convenant pour une couche faciale (SLR1) sur la base de l'indice d'adhésivité, de sorte que la force de détachement minimum ($F_{ADH1}$) de la couche adhésive (ADH1) nécessaire pour détacher la couche adhésive (ADH1) de la surface d'adhésion ($S_{OBJ}$) est supérieure à la force de rupture minimum ($F_{SLR1}$) de la couche faciale (SLR1) nécessaire pour briser la couche faciale (SLR1), et de sorte que la force de rupture minimum ($F_{SLR1}$) de la couche faciale (SLR1) nécessaire pour briser la couche faciale (SLR1) est inférieure à la force de rupture minimum ($F_{CLR1}$) nécessaire pour briser la couche centrale (CLR1),

- la formation d'un empilement comprenant la couche adhésive (ADH1), la couche centrale (CLR1) et la couche faciale (SLR1), et

- la formation de l'étiquette amovible (LAB1) ayant la longueur ($L_{10}$), la largeur ($W_{10}$) et l'épaisseur ($d_{10}$) à partir de l'empilement.

16. Utilisation d'une étiquette amovible (LAB1) selon l'une quelconque des revendications 1 à 12 sur une surface d'un emballage (OBJ1).

17. Utilisation d'une étiquette amovible (LAB1) selon la revendication 16, dans laquelle l'emballage (OBJ1) est un emballage réutilisable.

18. Utilisation d'une étiquette amovible (LAB1) selon les revendications 16 ou 17 pour indiquer visuellement le détachement de l'étiquette (LAB1) de l'emballage (OBJ1).

Fig. 1

Fig. 2a

Fig. 2b

Fig. 2c

Fig. 3

Fig. 4a

Fig. 4b

Fig. 4c

Fig. 5

Fig. 6

Fig. 7a

Fig. 7b

LAB1

$L_2$  $W_2$

SZ

SX  SZ

ADH1  CLR1

# Fig. 8a

LAB2

LAB1

SZ

SX  SY

# Fig. 8b

SZ

SX  SY

SLR1  CLR1

# Fig. 8c

CLR1      SLR1         CUT1     SLR2

SY

SX

P1                   P2

# Fig. 9

**EP 3 023 968 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9955791 A